# EUROPÄISCHE PATENTSCHRIFT

(11) **EP 2 960 100 B1**
(45) Veröffentlichungstag und Bekanntmachung des Hinweises auf die Patenterteilung: **07.08.2019**
(21) Anmeldenummer: 15170834.4
(22) Anmeldetag: 05.06.2015
(51) Int. Cl.: B60L 9/00

(54) **SERVICEROBOTERSYSTEM**
SERVICE ROBOT SYSTEMS
SYSTÈME DE ROBOT DE SERVICE

(30) Priorität: 27.06.2014 DE 102014212427
(43) Veröffentlichungstag der Anmeldung: 30.12.2015
(73) Patentinhaber: ROBERT BOSCH GMBH, 70442 Stuttgart (DE)
(72) Erfinder: Biber, Peter, 72119 Poltringen (DE); Petereit, Steffen, 71691 Freiberg A. N. (DE)

(56) Entgegenhaltungen:
- WO-A1-00/74465
- WO-A1-03/015220
- US-A1- 2004 130 290

## Beschreibung

### Stand der Technik

Es sind bereits Servicerobotersysteme, insbesondere Rasenmähersysteme, bekannt, die einen eine Energiespeichereinheit aufweisenden Serviceroboter, insbesondere einen autonomen Rasenmäher, und eine Basisstation aufweisen, die in zumindest einem Zustand zu einer Energiespeisung der Energiespeichereinheit des Serviceroboters vorgesehen ist. Hierzu weist der Serviceroboter oder die Basisstation zumindest zwei Flachkontaktladeelemente auf. Ferner sei als druckschriftlichen Stand der Technik auf die US 2004/130290 A1, WO 03/015220 A1 und WO 00/74465 A1 verwiesen.

### Offenbarung der Erfindung

Die Erfindung geht aus von einem Servicerobotersystem, insbesondere von einem Rasenmähersystem, mit zumindest einem Serviceroboter, insbesondere einem autonomen Rasenmäher, der zumindest eine Energiespeichereinheit umfasst, und mit zumindest einer Basisstation zumindest zu einer Energiespeisung der Energiespeichereinheit in zumindest einem Zustand, wobei der Serviceroboter oder die Basisstation zumindest zwei Flachkontaktladeelemente aufweist.

Es wird vorgeschlagen, dass die zumindest zwei Flachkontaktladeelemente dazu vorgesehen sind, einen Ladeandockprozess des Serviceroboters an der Basisstation zumindest in einem Winkelbereich von zumindest mehr als 15° zu ermöglichen. Der Winkelbereich verläuft insbesondere ausgehend von einer Längsachse, insbesondere einer Symmetrielängsachse, zumindest eines der zumindest zwei Flachkontaktladeelemente, wobei sich insbesondere jeweils 50 % des Winkelbereichs ausgehend von der Längsachse in zwei entgegengesetzte Richtungen erstrecken. Bevorzugt sind die zumindest zwei Flachkontaktladeelemente dazu vorgesehen, einen Ladeandockprozess des Serviceroboters an der Basisstation zumindest in einem Winkelbereich von zumindest mehr als 30° und besonders bevorzugt von zumindest mehr als 40° zu ermöglichen. Somit sind die zumindest zwei Flachkontaktladeelemente besonders bevorzugt dazu vorgesehen, einen Ladeandockprozess des Serviceroboters an der Basisstation aus verschiedenen Richtungen zu ermöglichen. Vorzugsweise sind die zumindest zwei Flachkontaktladeelemente dazu vorgesehen, zumindest einen Versatz, insbesondere einen Winkelversatz oder einen parallelen Versatz, zwischen der Längsachse zumindest eines der zumindest zwei Flachkontaktladeelemente relativ zu zumindest einer Längsachse einer Gegenkontakteinheit oder der Basisstation, während eines Ladeandockprozesses auszugleichen. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Unter einem "Ladeandockprozess" soll hier insbesondere ein Prozess verstanden werden, bei dem der Serviceroboter die Basisstation anfährt und die zumindest zwei Flachkontaktladeelemente zu einer Energiespeisung der Energiespeichereinheit mit der Gegenkontakteinheit, insbesondere mit zumindest zwei Gegenkontaktelementen der Gegenkontakteinheit, zu einer Energieübertragung, insbesondere einer elektrischen Energieübertragung, in Kontakt bringbar sind. Der Serviceroboter leitet den Ladeandockprozess hierbei vorzugsweise auf eine, einem Fachmann bereits bekannte Art und Weise selbsttätig ein, insbesondere infolge einer Erkennung eines Unterschreitens eines Energiespeichergrenzwerts der Energiespeichereinheit.

Unter einem "Flachkontaktladeelement" soll hier insbesondere ein Kontaktladeelement verstanden werden, das eine Bauteilstärke aufweist, die um ein Vielfaches, insbesondere um zumindest ein Zweifaches, bevorzugt um zumindest ein Dreifaches und besonders bevorzugt um zumindest ein Vierfaches, kleiner ist als eine quer dazu verlaufende Erstreckung, insbesondere eine Haupterstreckung, des Kontaktladeelements. Besonders bevorzugt wird die Bauteilstärke entlang einer zumindest im Wesentlichen parallel zu einer Hochachse der Basisstation oder des Serviceroboters verlaufenden Richtung gemessen. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Eine Haupterstreckung, insbesondere eine größte Flächenerstreckung, des jeweiligen Flachkontaktladeelements verläuft besonders bevorzugt in einer Ebene, die sich zumindest im Wesentlichen senkrecht zur Hochachse der Basisstation oder des Serviceroboters erstreckt. Hierbei kann/können das/die Flachkontaktladeelement/e jegliche, einem Fachmann als sinnvoll erscheinende Querschnittsform aufweisen, wie beispielsweise eine polygonale Querschnittsform oder eine nichtpolygonale Querschnittsform. Somit kann/können das/die Flachkontaktladeelement/e eine runde Querschnittsform, eine quadratische Querschnittsform, eine dreieckige Querschnittsform, eine rechteckige Querschnittsform, eine elliptische Querschnittsform, eine ovale Querschnittsform o. dgl. aufweisen.

Die Hochachse des Serviceroboters verläuft bevorzugt zumindest im Wesentlichen senkrecht zu einer Untergrundkontaktfläche des Serviceroboters, insbesondere einer Untergrundkontaktfläche einer Fahrwerkseinheit des Serviceroboters. Die Hochachse der Basisstation verläuft vorzugsweise zumindest im Wesentlichen senkrecht zu einer Untergrundstandfläche der Basisstation, insbesondere einer Untergrundstandfläche einer Bodenplatte der Basisstation. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Der Serviceroboter ist besonders bevorzugt als autonomes Fortbewegungsgerät ausgebildet. Unter einem "autonomen Fortbewegungsgerät" soll hier insbesondere ein Gerät verstanden werden, das sich selbsttätig in einem Bereich und/oder in einer Umgebung fortbewegt, orientiert oder selbsttätig navigiert, insbesondere sich nach einem Anlernprozess selbsttätig in einem Bereich und/oder in einer Umgebung fortbewegt und/oder orientiert. Der Ausdruck "sich selbsttätig fortbewegen und/oder orientieren" soll hier insbesondere eine Fortbewegung, eine Orientierung und/oder eine Navigation des autonomen Fortbewegungsgeräts, insbesondere nach einem Anlernprozess, ohne einen menschlichen Eingriff definieren. Vorzugsweise bewegt sich der Serviceroboter nach einem von einem Bediener mit dem Serviceroboter durchgeführten Anlernprozess selbsttätig in einem Bereich und/oder in einer Umgebung fort bzw. orientiert sich selbsttätig in einem Bereich und/oder in einer Umgebung. Zu einer selbsttätigen Fortbewegung, Orientierung und/oder Navigation kann der Serviceroboter jegliche, einem Fachmann als sinnvoll erscheinende und ihm bereits bekannte Vorrichtungen aufweisen, wie beispielsweise eine GPS-Vorrichtung, eine Kompassvorrichtung, eine Einfassungsdrahtvorrichtung, eine Optikvorrichtung o. dgl. Der Serviceroboter kann hierbei als autonomer Rasenmäher, als autonomer Staubsauger, als autonome Kehrmaschine, als autonomes Transportfahrzeug, als autonomes Fluggerät, als autonomes Agrargerät o. dgl. ausgebildet sein. Bevorzugt ist der Serviceroboter als autonomer Rasenmäher ausgebildet, der dazu vorgesehen ist, eine als Rasenfläche ausgebildete Arbeitsfläche und/oder eine als Gartenumgebung ausgebildete Arbeitsumgebung abzufahren und/oder zu bearbeiten. Hierzu weist der Serviceroboter besonders bevorzugt eine als Mähwerkeinheit ausgebildete Arbeitsflächenbearbeitungseinheit auf. Die Arbeitsflächenbearbeitungseinheit kann hierbei mittels einer Antriebseinheit des Serviceroboters, die zumindest zu einem Antrieb der Fahrwerkseinheit des Serviceroboters vorgesehen ist, oder mittels einer separaten Mähwerkantriebseinheit, die getrennt von der Antriebseinheit zum Antrieb der Fahrwerkseinheit ausgebildet ist, angetrieben werden.

Mittels der erfindungsgemäßen Ausgestaltung des Servicerobotersystems kann vorteilhaft ein Ladeandockprozess des Serviceroboters an der Basisstation aus unterschiedlichen Richtungen ermöglicht werden. Somit kann vorteilhaft eine hohe Flexibilität hinsichtlich eines Ladeandockprozesses erreicht werden. Beispielsweise ist vorteilhaft ein alternativer Ladeandockprozess einleitbar, insbesondere ein entlang einer alternativen Anfahrtsrichtung durchführbarer alternativer Ladeandockprozess, wenn in einem ersten Ladeandockprozess erkannt wird, dass ein Anfahrtsweg durch einen Gegenstand, wie beispielsweise einen Ast o. dgl., versperrt ist. Auch die aktive Nutzung alternativer Anfahrtswege zu einer Schonung des Rasens oder um einen kurzen Anfahrtsweg zu erreichen, wenn verschiedene Sektoren des Arbeitsbereichs in unterschiedlichen Zeitfenstern bearbeitet werden, kann vorteilhaft mittels der erfindungsgemäßen Ausgestaltung erreicht werden. Zudem kann vorteilhaft ein häufiges Anfahren zu einer Kontaktierung der zumindest zwei Flachkontaktladeelemente mit der Gegenkontakteinheit während des Ladeandockprozesses vermieden werden, da eine geringe Präzision zu einer Kontaktierung nötig ist. Hierdurch kann eine Arbeitsfläche, insbesondere eine Grasfläche, vorteilhaft geschont werden.

Besonders bevorzugt ist der Ladeandockprozess des Serviceroboters bezogen auf eine Zentrumsachse der Basisstation relativ zu einer Mittelachse des Serviceroboters in einem Winkelbereich von zumindest ± 7,5° ermöglichbar. Bevorzugt wird der Ladeandockprozess des Serviceroboters bezogen auf eine Zentrumsachse der Basisstation relativ zu einer Mittelachse des Serviceroboters in einem Winkelbereich von mehr als ± 10° und besonders bevorzugt von mehr als ± 15° ermöglicht. Hierbei verläuft die Zentrumsachse der Basisstation besonders bevorzugt zumindest im Wesentlichen senkrecht zur Hochachse der Basisstation. Die Mittelachse des Serviceroboters verläuft bevorzugt zumindest im Wesentlichen senkrecht zur Hochachse des Serviceroboters. Es kann vorteilhaft ein Ladeandockprozess des Serviceroboters an der Basisstation in unterschiedlichen Winkelsektoren ermöglicht werden.

Des Weiteren wird vorgeschlagen, dass die zumindest zwei Flachkontaktladeelemente vertikal versetzt zueinander angeordnet sind. Bevorzugt sind die zumindest zwei Flachkontaktladeelemente, betrachtet entlang einer zumindest im Wesentlichen parallel zur Hochachse des Serviceroboters oder der Basisstation verlaufenden Richtung, vertikal versetzt zueinander angeordnet. Somit sind die zumindest zwei Flachkontaktladeelemente in zwei zumindest im Wesentlichen parallel zueinander verlaufenden Horizontalebenen angeordnet. Die Horizontalebenen verlaufen hierbei zumindest im Wesentlichen senkrecht zur Hochachse des Serviceroboters oder der Basisstation. Besonders bevorzugt ragen die zumindest zwei Flachkontaktladeelemente, betrachtet entlang einer zumindest im Wesentlichen senkrecht zur Hochachse des Serviceroboters oder der Basisstation verlaufenden Richtung, zumindest über einen Teilbereich des Serviceroboters oder der Basisstation hinaus. Vorzugsweise weisen die zumindest zwei Flachkontaktladeelemente, betrachtet in der jeweiligen Horizontalebene, eine maximale Quererstreckung auf, die um ein Vielfaches kleiner ist als eine maximale Längserstreckung. Hierbei ist es denkbar, dass die zumindest zwei Flachkontaktladeelemente, betrachtet in der jeweiligen Horizontalebene, eine polygonale Ausgestaltung, eine kreissektorartige Ausgestaltung, eine ellipsensektorartige Ausgestaltung o. dgl. aufweisen. In einer alternativen Ausgestaltung weisen die zumindest zwei Flachkontaktladeelemente, betrachtet in der jeweiligen Horizontalebene, eine kreisartige Ausgestaltung auf, bei der insbesondere eine maximale Quererstreckung einer maximalen Längserstreckung entspricht. Zudem ist es alternativ oder zusätzlich denkbar, dass die zumindest zwei Flachkontaktladeelemente, betrachtet in einer Horizontalebene, hintereinander angeordnet sind und dazu vorgesehen sind, ein Kontaktladeelement mit einem kreisförmigen Querschnitt, wie beispielsweise ein klinkensteckerartiges Kontaktladeelement aufzunehmen. Hierdurch kann vorteilhaft eine Fehlausrichtung des Serviceroboters relativ zur Basisstation um eine Längsrichtung des Serviceroboters ausgeglichen werden. Mittels der erfindungsgemäßen Ausgestaltung kann konstruktiv einfach ein Ladeandockprozess des Serviceroboters an der Basisstation aus unterschiedlichen Richtungen ermöglicht werden.

Ferner wird vorgeschlagen, dass die zumindest zwei Flachkontaktladeelemente, betrachtet entlang einer Hochachse des Serviceroboters oder der Basisstation, insbesondere der Hochachse des Serviceroboters oder der Basisstation, zumindest im Wesentlichen fluchtend zueinander angeordnet sind. Unter "zumindest im Wesentlichen fluchtend" soll hier insbesondere eine Ausrichtung der zumindest zwei Flachkontaktladeelemente relativ zueinander verstanden werden, wobei zumindest zwei Außenkanten der zumindest zwei Flachkontaktladeelemente, betrachtet entlang einer zumindest im Wesentlichen parallel zur Hochachse des Serviceroboters oder der Basisstation verlaufenden Richtung, überdeckend angeordnet sind oder, betrachtet entlang einer zumindest im Wesentlichen senkrecht zur Hochachse des Serviceroboters oder der Basisstation verlaufenden Richtung, einen maximalen Versatz von insbesondere weniger als 20 mm, bevorzugt weniger als 15 mm und besonders bevorzugt weniger als 10 mm aufweisen. Mittels der erfindungsgemäßen Ausgestaltung kann vorteilhaft eine kompakte Anordnung der zumindest zwei Flachkontaktladeelemente erreicht werden.

Zudem kann vorteilhaft eine zuverlässige Kontaktierung sichergestellt werden, da die zumindest zwei Flachkontaktladeelemente bei einer schrägen Anfahrt zur Kontaktierung zuverlässig in Kontakt mit der Gegenkontakteinheit bringbar sind.

Zudem wird vorgeschlagen, dass die zumindest zwei Flachkontaktladeelemente plattenartig, scheibenartig oder zungenartig ausgebildet sind. Somit sind die zumindest zwei Flachkontaktladeelemente vorzugsweise als flächige Bauteile ausgebildet, die zumindest in einem unbelasteten Zustand zumindest im Wesentlichen eben sind. Es ist jedoch auch denkbar, dass die zumindest zwei Flachkontaktladeelemente eine andere, einem Fachmann als sinnvoll erscheinende Ausgestaltung aufweisen. Hierbei können die zumindest zwei Flachkontaktladeelemente, betrachtet in einer zumindest im Wesentlichen senkrecht zur Hochachse des Serviceroboters oder der Basisstation verlaufenden Ebene, eine polygonale Ausgestaltung, eine kreissektorartige Ausgestaltung, eine ellipsensektorartige Ausgestaltung o. dgl. aufweisen. Mittels der erfindungsgemäßen Ausgestaltung kann vorteilhaft eine große Kontaktfläche erreicht werden, mittels deren ein vorteilhafter Ladeandockprozess aus verschiedenen Richtungen realisierbar ist.

Vorteilhafterweise umfasst das Servicerobotersystem zumindest eine Gegenkontakteinheit, die zu einer Aufnahme zumindest eines der zumindest zwei Flachkontaktladeelemente vorgesehen ist und die derart ausgestaltet ist, dass der Ladeandockprozess des Serviceroboters bezogen auf die Zentrumsachse der Basisstation zur Mittelachse des Serviceroboters in einem Winkelbereich von zumindest ± 7,5° ermöglichbar ist. Bevorzugt ist die Gegenkontakteinheit derart ausgebildet, dass der Ladeandockprozess des Serviceroboters bezogen auf eine Zentrumsachse der Basisstation relativ zu einer Mittelachse des Serviceroboters in einem Winkelbereich von mehr als ± 10° und besonders bevorzugt von mehr als ± 15° ermöglichbar ist.

Des Weiteren wird vorgeschlagen, dass das Servicerobotersystem zumindest eine Gegenkontakteinheit umfasst, die zu einer Aufnahme zumindest eines der zumindest zwei Flachkontaktladeelemente vorgesehen ist und die eine Einführöffnung aufweist, die eine minimale Breitenerstreckung aufweist, die zumindest einem Dreifachen einer maximalen Breitenerstreckung eines der zumindest zwei Flachkontaktladeelemente entspricht. Die minimale Breitenerstreckung der Einführöffnung verläuft vorzugsweise in einer Ebene, die sich zumindest im Wesentlichen senkrecht zur Hochachse des Serviceroboters oder der Basisstation erstreckt. Bei einer Ausgestaltung des Serviceroboters mit den zumindest zwei Flachkontaktladeelementen weist vorzugsweise die Basisstation die Gegenkontakteinheit auf. Bei einer Ausgestaltung der Basisstation mit den zumindest zwei Flachkontaktladeelementen weist bevorzugt der Serviceroboter die Gegenkontakteinheit auf. Somit kann konstruktiv einfach eine Einführmöglichkeit der zumindest zwei Flachkontaktladeelemente in zumindest einem Winkelbereich von mehr als 15° erreicht werden. Es ist besonders vorteilhaft ein Versatz bei einem Ladeandockprozess ausgleichbar.

Vorteilhafterweise umfasst das Servicerobotersystem zumindest eine Gegenkontakteinheit, die zumindest ein Gegenkontaktelement aufweist, das, betrachtet in einer zumindest im Wesentlichen senkrecht zur Hochachse des Serviceroboters oder der Basisstation verlaufenden Horizontalebene, flächig ausgebildet ist. Somit kann vorteilhaft eine große Kontaktierungsfläche bereitgestellt werden, die einen Ladeandockprozess aus unterschiedlichen Richtungen ermöglicht.

Ferner wird vorgeschlagen, dass das Servicerobotersystem zumindest eine Gegenkontakteinheit umfasst, die zu einer Aufnahme zumindest eines der zumindest zwei Flachkontaktladeelemente vorgesehen ist, und die sich zumindest über einen Winkelbereich von mehr als 30° erstreckt. Insbesondere erstreckt sich eine Einführöffnung der Gegenkontakteinheit über einen Winkelbereich von mehr als 30°, bevorzugt über einen Winkelbereich von mehr als 60° und besonders bevorzugt über einen Winkelbereich von mehr als 90°. Bei einer Ausgestaltung der Basisstation mit den zumindest zwei Flachkontaktladeelementen weist bevorzugt der Serviceroboter die Gegenkontakteinheit auf, die sich über einen Winkelbereich von mehr als 60° erstreckt, insbesondere an einer Vorderseite des Serviceroboters. Hierzu weist der Serviceroboter, betrachtet in einer zumindest im Wesentlichen senkrecht zur Hochachse des Serviceroboters verlaufenden Ebene, vorzugsweise eine abgerundete Vorderseite auf, insbesondere eine kreissegmentartige Vorderseite. Mittels der erfindungsgemäßen Ausgestaltung kann eine besonders zuverlässige Kontaktierung der zumindest zwei Flachkontaktladeelemente mit der Gegenkontakteinheit über einen großen Winkelbereich erreicht werden.

Zudem wird vorgeschlagen, dass das Servicerobotersystem zumindest ein Isolatorelement umfasst, das zwischen den zumindest zwei Flachkontaktladeelementen angeordnet ist und zumindest teilweise an den zumindest zwei Flachkontaktladeelementen anliegt. Hierbei ist das Isolatorelement vorzugsweise, betrachtet entlang einer zumindest im Wesentlichen parallel zur Hochachse des Serviceroboters oder der Basisstation verlaufenden Richtung, zwischen den zumindest zwei Flachkontaktladeelementen angeordnet. Bevorzugt liegen die zumindest zwei Flachkontaktladeelemente flächig am Isolatorelement an. Es ist jedoch auch denkbar, dass die zumindest zwei Flachkontaktladeelemente lediglich partiell am Isolatorelement anliegen. Somit kann vorteilhaft eine Kurzschlussgefahr infolge einer Berührung der zumindest zwei Flachkontaktladeelemente vorteilhaft gering gehalten werden. Somit können vorteilhaft eine hohe Bedienersicherheit und eine hohe Produktsicherheit erreicht werden.

Des Weiteren wird vorgeschlagen, dass das Isolatorelement sich zumindest entlang einer Richtung über zumindest eines der zumindest zwei Flachkontaktladeelemente hinaus erstreckt. Hierbei erstreckt sich das Isolatorelement bevorzugt entlang einer zumindest im Wesentlichen quer, insbesondere senkrecht, zur Hochachse des Serviceroboters oder der Basisstation verlaufenden Richtung über zumindest eines der zumindest zwei Flachkontaktladeelemente hinaus. Vorzugsweise erstreckt sich das Isolatorelement zumindest entlang einer Richtung über beide der zumindest zwei Flachkontaktladeelemente hinaus. Somit kann vorteilhaft eine Kontaktüberbrückungsgefahr mittels eines metallischen Gegenstands gering gehalten werden, da der metallische Gegenstand vorteilhaft nur mit dem Isolatorelement und lediglich einem der zumindest zwei Flachkontaktladeelemente in Kontakt bringbar ist.

Ferner wird vorgeschlagen, dass die zumindest zwei Flachkontaktladeelemente relativ zueinander beweglich gelagert sind. Hierbei ist vorzugsweise zumindest eines der zumindest zwei Flachkontaktladeelemente beweglich am Serviceroboter oder an der Basisstation gelagert. Der Ausdruck "beweglich gelagert" soll hier insbesondere eine Lagerung einer Einheit und/oder eines Elements definieren, wobei die Einheit und/oder das Element, insbesondere entkoppelt von einer elastischen Verformung der Einheit und/oder des Elements, eine Bewegungsmöglichkeit entlang zumindest einer Strecke größer als 5 mm, bevorzugt größer als 10 mm und besonders bevorzugt größer als 20 mm aufweist und/oder eine Bewegungsmöglichkeit um zumindest eine Achse um einen Winkel größer als 15°, bevorzugt größer als 30° und besonders bevorzugt größer als 45° aufweist. Hierbei ist vorzugsweise zumindest eines der zumindest zwei Flachkontaktladeelemente bei einer Ausgestaltung des Serviceroboters mit den zumindest zwei Flachkontaktladeelementen relativ zu einem Gehäuse des Serviceroboters beweglich gelagert. Bei einer Ausgestaltung der Basisstation mit den zumindest zwei Flachkontaktladeelementen ist bevorzugt zumindest eines der zumindest zwei Flachkontaktladeelemente relativ zu einem Gehäuse der Basisstation beweglich gelagert. Ferner ist es auch denkbar, dass zumindest eines der zumindest zwei Flachkontaktladeelemente translatorisch beweglich gelagert ist, wie beispielsweise entlang einer zumindest im Wesentlichen parallel zur Hochachse verlaufenden Richtung, oder zumindest eines der zumindest zwei Flachkontaktladeelemente schwenkbar gelagert ist. Eine Zentrierung des zumindest einen der zumindest zwei Flachkontaktladeelement kann hierbei vorteilhaft über zumindest ein Festkörpergelenke, zumindest eine Federzunge, mittels einer Führungseinheit und einer damit zusammenwirkenden Zug- oder Druckfeder, oder über ein anderes, einem Fachmann als sinnvoll erscheinendes Element erreicht werden. Mittels der erfindungsgemäßen Ausgestaltung kann vorteilhaft eine zusätzliche Sicherungsfunktion des Serviceroboters in einem an der Basisstation angedockten Zustand des Serviceroboters ermöglicht werden. Zudem kann vorteilhaft eine Diebstahlsicherungsfunktion realisiert werden.

Zudem wird vorgeschlagen, dass das Servicerobotersystem zumindest eine Positionshalteeinheit aufweist, die dazu vorgesehen ist, den Serviceroboter zumindest in einer Ladeposition relativ zur Basisstation zu halten. Die Positionshalteeinheit kann hierbei beispielsweise von zumindest einem der beweglich gelagerten Flachkontaktladeelemente oder von beiden Flachkontaktladeelemente gebildet werden. Es ist jedoch auch denkbar, dass die Positionshalteeinheit separat von den zumindest zwei Flachkontaktladeelementen ausgebildet ist, wie beispielsweise bei einer Ausgestaltung der Positionshalteeinheit als magnetische Halteeinheit, als Vertiefung, in die der Serviceroboter bei einem Anfahren der Basisstation hineinfährt o. dgl. Mittels der erfindungsgemäßen Ausgestaltung kann vorteilhaft eine sichere Positionierung des Serviceroboters in einer Ladeposition relativ zur Basisstation erreicht werden.

Des Weiteren wird vorgeschlagen, dass das Servicerobotersystem zumindest eine Kontaktberührschutzeinheit umfasst, die zumindest ein beweglich gelagertes Kontaktberührschutzelement aufweist, das dazu vorgesehen ist, zumindest eines der zumindest zwei Flachkontaktladeelemente oder zumindest ein Gegenkontaktladeelement einer Gegenkontaktladeeinheit in zumindest einem Zustand abzudecken. Hierbei ist es denkbar, dass das beweglich gelagerte Kontaktberührschutzelement direkt an zumindest einem der zumindest zwei Flachkontaktladeelemente angeordnet ist oder dass das Kontaktberührschutzelement beide Flachkontaktladeelemente in zumindest einem Zustand abdeckt. Bevorzugt umfasst das Servicerobotersystem zusätzlich zumindest eine Freigabeeinheit, die dazu vorgesehen ist, zumindest eine maximale Ladespannung in zumindest einer Ladeposition des autonomen Serviceroboters relativ zur Basisstation in Abhängigkeit von zumindest einer Kenngröße freizugeben. Hierbei können der Serviceroboter und die Basisstation jeweils zumindest eine Kommunikationseinheit umfassen, die zu einer Übertragung von Daten, insbesondere von elektronischen Daten oder digitalen Signalen, vorgesehen ist. Die Kommunikationseinheit ist vorzugsweise als kabellose Kommunikationseinheit ausgebildet. Hierbei kann die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Kommunikationseinheit zu einer bidirektionalen Datenübertragung vorgesehen. Mittels der Freigabeeinheit kann vorteilhaft sichergestellt werden, dass an den zumindest zwei Flachkontaktladeelementen in einem mit der Gegenkontakteinheit unverbundenen Zustand lediglich eine sichere Kleinspannung anliegt. Bei einer Kontaktierung der zumindest zwei Flachkontaktladeelemente und der Gegenkontakteinheit ist infolge einer Kommunikation zwischen dem Serviceroboter und der Basisstation eine sichere Kontaktierung verifizierbar. Somit kann nach einer Verifizierung einer sicheren Kontaktierung eine hohe Ladespannung auf die zumindest zwei Flachkontaktladeelemente und die Gegenkontakteinheit geschaltet werden. Die Kommunikation zwischen dem Serviceroboter und der Basisstation kann hierbei mittels einer speziellen zusätzlichen elektrischen Kontaktierung, mittels der Kommunikationseinheit, mittels einer magnetischen Codierung, mittels einer mechanischen Codierung o. dgl. erfolgen. Mittels der erfindungsgemäßen Ausgestaltung kann vorteilhaft ein sicherer Berührschutz ermöglicht werden. Ferner kann vorteilhaft ein Anliegen einer hohen Ladespannung bei unordnungsgemäßer Kontaktierung vermieden werden. Somit kann ein vorteilhafter Bedienerschutz erreicht werden. Zudem kann vorteilhaft eine Gefahr von Kurzschlussschäden am Serviceroboter oder an der Basisstation gering gehalten werden.

Ferner wird vorgeschlagen, dass das Servicerobotersystem zumindest eine Datenloggereinheit umfasst, die dazu vorgesehen ist, zumindest eine Ladekenngröße von zumindest zwei unterschiedlichen Servicerobotern zu loggen und auszuwerten. Unter einer "Datenloggereinheit" soll hier insbesondere eine Einheit verstanden werden, die Daten, insbesondere digitale Daten, über eine Schnittstelle zumindest aufnimmt und auf einem Speichermedium ablegt. Zu einer Aufnahme von Daten kann die Datenloggereinheit eine Sensoreinheit umfassen. Es ist jedoch auch denkbar, dass die Datenloggereinheit alternativ oder zusätzlich zur Sensoreinheit zumindest ein Betriebsprogramm umfasst, das Daten aufbereitet und im Speichermedium ablegt. Mittels der erfindungsgemäßen Ausgestaltung kann vorteilhaft eine einzelne Basisstation zu einem Laden von unterschiedlichen Servicerobotern genutzt werden, wobei ein Energieverbrauch beispielsweise zu einer individuellen Abrechnung geloggt werden kann.

Zudem wird ein Serviceroboter, insbesondere ein autonomer Rasenmäher, eines erfindungsgemäßen Servicerobotersystems vorgeschlagen. Es kann vorteilhaft ein Serviceroboter realisiert werden, mittels dessen vorteilhaft ein Ladeandockprozess aus verschiedenen Richtungen möglich ist.

Des Weiteren wird eine Basisstation eines erfindungsgemäßen Servicerobotersystems vorgeschlagen. Die Basisstation kann hierbei eine Gartenlampeneinheit, eine Bewegungsmeldereinheit und/oder eine Wetterstationseinheit umfassen. Mittels der erfindungsgemäßen Ausgestaltung kann vorteilhaft eine Basisstation realisiert werden, mittels deren vorteilhaft ein Ladeandockprozess aus verschiedenen Richtungen möglich ist.

Ferner wird vorgeschlagen, dass die Basisstation zumindest eine Hilfsstoffbetankungseinheit umfasst, die dazu vorgesehen ist, zumindest einen Serviceroboter in zumindest einem Zustand mit zumindest einem Hilfsstoff zu betanken. Unter einer "Hilfsstoffbetankungseinheit" soll hier insbesondere eine Einheit verstanden werden, die dazu vorgesehen ist, den Serviceroboter mit einem als Dünger, Wasser o. dgl. ausgebildeten Hilfsstoff zu betanken. Zu einer Speicherung von zumindest einem Hilfsstoff umfasst die Hilfsstoffbetankungseinheit zumindest einen Hilfsstoffvorratsbehälter oder die Hilfsstoffbetankungseinheit ist direkt mit einer Hilfsstoffdirektversorgungsvorrichtung, wie beispielsweise einer Wasserleitung o. dgl., verbunden. Mittels der erfindungsgemäßen Ausgestaltung kann vorteilhaft zusätzlich zur Ermöglichung eines Ladeandockprozesses aus verschiedenen Richtungen eine Zusatzfunktion der Basisstation ermöglicht werden. Somit kann eine hohe Vielfalt hinsichtlich einer Einsatzmöglichkeit der Basisstation erreicht werden.

Das erfindungsgemäße Servicerobotersystem, der erfindungsgemäße Serviceroboter und/oder die erfindungsgemäße Basisstation sollen/soll hierbei nicht auf die oben beschriebene Anwendung und Ausführungsform beschränkt sein. Insbesondere können/kann das erfindungsgemäße Servicerobotersystem, der erfindungsgemäße Serviceroboter und/oder die erfindungsgemäße Basisstation zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind acht Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
- Fig. 1: ein erfindungsgemäßes Servicerobotersystem in einer schematischen Darstellung, wobei ein Serviceroboter des erfindungsgemäßen Servicerobotersystems in einem an einer Basisstation des erfindungsgemäßen Servicerobotersystems angedockten Zustand dargestellt ist,
- Fig. 2: eine Detailansicht von zumindest zwei Flachkontaktladeelementen der Basisstation des erfindungsgemäßen Servicerobotersystems in einer schematischen Darstellung,
- Fig. 3: eine Detailansicht einer am Serviceroboter angeordneten Gegenkontakteinheit des erfindungsgemäßen Servicerobotersystems in einer schematischen Darstellung,
- Fig. 4: eine Detailansicht der zumindest zwei Flachkontaktladeelemente und der Gegenkontakteinheit in einer schematischen Darstellung,
- Fig. 5: eine Detailansicht einer alternativen Ausgestaltung von zumindest zwei Flachkontaktladeelementen und einer Gegenkontakteinheit eines erfindungsgemäßen Servicerobotersystems in einer schematischen Darstellung,
- Fig. 6: ein alternatives Servicerobotersystem in einer schematischen Darstellung, wobei ein Serviceroboter des alternativen Servicerobotersystems in einem an einer Basisstation des alternativen Servicerobotersystems angedockten Zustand dargestellt ist,
- Fig. 7: eine Detailansicht des alternativen Servicerobotersystems aus Figur 6 in einer schematischen Darstellung,
- Fig. 8: eine alternative Ausgestaltung von zumindest Flachkontaktladeelementen und einer Gegenkontakteinheit eines Servicerobotersystems in einer schematischen Darstellung,
- Fig. 9: ein weiteres alternatives Servicerobotersystem in einer schematischen Darstellung, wobei ein Serviceroboter des weiteren alternativen Servicerobotersystems in einem an einer Basisstation des alternativen Servicerobotersystems angedockten Zustand dargestellt ist,
- Fig. 10: eine Detailansicht des Serviceroboters des weiteren alternativen erfindungsgemäßen Servicerobotersystems aus Figur 9 in einer schematischen Darstellung,
- Fig. 11: ein weiteres alternatives erfindungsgemäßes Servicerobotersystem in einer schematischen Darstellung, wobei ein Serviceroboter des weiteren alternativen erfindungsgemäßen Servicerobotersystems in einem an einer Basisstation des alternativen erfindungsgemäßen Servicerobotersystems angedockten Zustand dargestellt ist,
- Fig. 12: ein weiteres alternatives erfindungsgemäßes Servicerobotersystem in einer schematischen Darstellung, wobei ein Serviceroboter des weiteren alternativen erfindungsgemäßen Servicerobotersystems in einem an einer Basisstation des alternativen erfindungsgemäßen Servicerobotersystems angedockten Zustand dargestellt ist, und
- Fig. 13: ein weiteres alternatives erfindungsgemäßes Servicerobotersystem in einer schematischen Darstellung, wobei ein Serviceroboter des weiteren alternativen erfindungsgemäßen Servicerobotersystems in einem an einer Basisstation des alternativen erfindungsgemäßen Servicerobotersystems angedockten Zustand dargestellt ist.

### Beschreibung der Ausführungsbeispiele

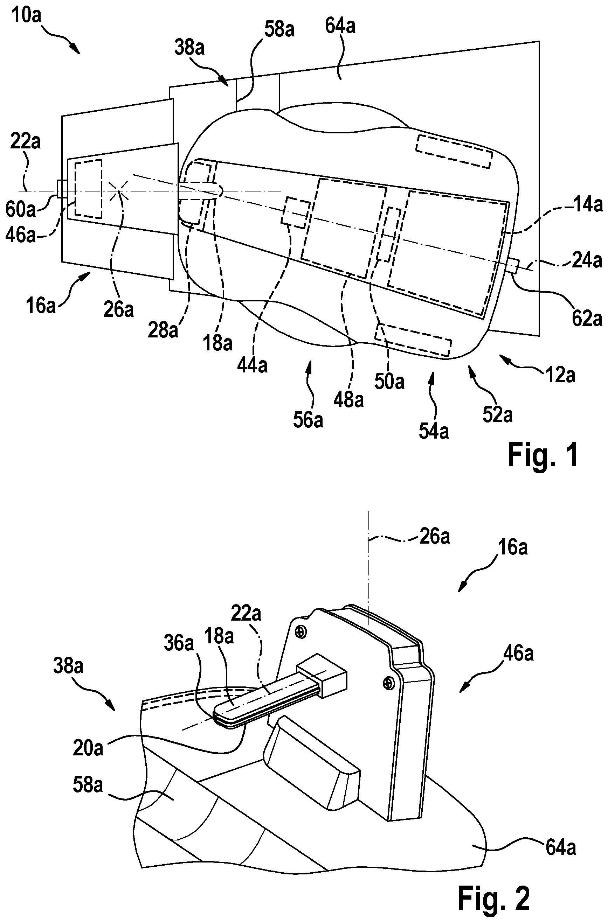

Figur 1 zeigt ein Servicerobotersystem 10a mit zumindest einem Serviceroboter 12a, der zumindest eine Energiespeichereinheit 14a umfasst, und mit zumindest einer Basisstation 16a zumindest zu einer Energiespeisung der Energiespeichereinheit 14a in zumindest einem Zustand, wobei der Serviceroboter 12a oder die Basisstation 16a zumindest zwei Flachkontaktladeelemente 18a, 20a aufweist. In dem in Figur 1 dargestellten Ausführungsbeispiel weist die Basisstation 16a die zumindest zwei Flachkontaktladeelemente 18a, 20a auf. Das Servicerobotersystem 10a ist als Rasenmähersystem ausgebildet. Somit ist der Serviceroboter 12a als autonomer Rasenmäher ausgebildet. Der Serviceroboter 12a umfasst zumindest eine Antriebseinheit 48a, zumindest die Energiespeichereinheit 14a zumindest zu einer Energieversorgung der Antriebseinheit 48a und zumindest eine Steuer- und/oder Regeleinheit 50a zumindest zu einer Steuerung und/oder Regelung der Antriebseinheit 48a. Die Antriebseinheit 48a ist hierbei als Elektromotoreinheit ausgebildet. Es ist jedoch auch denkbar, dass die Antriebseinheit 48a eine andere, einem Fachmann als sinnvoll erscheinende Ausgestaltung aufweist, wie beispielsweise eine Ausgestaltung als Brennkraftmotoreinheit, als Hybridmotoreinheit o. dgl.

Die Energiespeichereinheit 14a ist zusätzlich zu einer Energieversorgung der Antriebseinheit 48a zu einer Energieversorgung von weiteren Komponenten des Serviceroboters 12a vorgesehen. Die Energiespeichereinheit 14a ist hierbei als Akkumulatoreinheit ausgebildet. Es ist jedoch auch denkbar, dass die Energiespeichereinheit 14a eine andere, einem Fachmann als sinnvoll erscheinende Ausgestaltung aufweist, wie beispielsweise eine Ausgestaltung als kabelgebundene Netzteileinheit, als Brennstoffzelle, als Kraftstoffvorratseinheit o. dgl. Der Serviceroboter 12a umfasst ferner zumindest eine Gehäuseeinheit 52a, die zumindest die Antriebseinheit 48a, die Energiespeichereinheit 14a und die Steuer- und/oder Regeleinheit 50a zumindest teilweise umschließt. Zudem umfasst der Serviceroboter 12a zumindest eine Fahrwerkseinheit 54a. Die Fahrwerkseinheit 54a weist eine, einem Fachmann bereits bekannte Ausgestaltung auf. Somit kann die Fahrwerkseinheit 54a lenkbare und/oder nicht lenkbare Räder umfassen, die antreibbar oder antriebslos ausgebildet sind. Die Fahrwerkseinheit 54a, insbesondere zumindest ein Antriebsrad der Fahrwerkseinheit 54a, ist mittels der Antriebseinheit 48a auf eine, einem Fachmann bereits bekannte Art und Weise antreibbar. Des Weiteren kann der Serviceroboter 12a zumindest eine Standortortungseinheit (hier nicht näher dargestellt) umfassen, welche zu einer Positionsbestimmung des Serviceroboters 12a innerhalb eines Arbeitsbereichs, insbesondere auf einer Arbeitsfläche, vorgesehen ist. Die Standortortungseinheit kann an oder in der Gehäuseeinheit 52a angeordnet sein. Hierbei kann die Standortortungseinheit beispielsweise als GPS-Einheit ausgebildet sein. Es ist jedoch auch denkbar, dass die Standortortungseinheit eine andere, einem Fachmann als sinnvoll erscheinende Ausgestaltung aufweist oder dass der Serviceroboter 12a ohne eine Standortortungseinheit ausgebildet ist und sich mittels einer induktiven Kommunikation mit einem im Arbeitsbereich verlegten Einfassungsdraht im Arbeitsbereich autonom fortbewegt und/oder orientiert.

Der Serviceroboter 12a ist dazu vorgesehen, sich, insbesondere nach einem Anlernprozess, selbstständig innerhalb des Arbeitsbereichs bzw. einer Arbeitsumgebung fortzubewegen und eine in dem Arbeitsbereich bzw. der Arbeitsumgebung angeordnete Arbeitsfläche, insbesondere eine Grasfläche, selbsttätig zu bearbeiten. Zu einer Bearbeitung der Arbeitsfläche weist der Serviceroboter 12a eine als Mähwerkeinheit ausgebildete Arbeitsflächenbearbeitungseinheit 56a auf. Die Arbeitsflächenbearbeitungseinheit 56a weist eine, einem Fachmann bereits bekannte Ausgestaltung auf. Hierbei kann die als Mähwerkeinheit ausgebildete Arbeitsflächenbearbeitungseinheit 56a zumindest ein Schneidelement, zumindest eine Mähwerkantriebseinheit und/oder zumindest eine Mähgutsammeleinheit aufweisen. In einer besonders vorteilhaften Ausgestaltung des Serviceroboters 12a ist die als Mähwerkeinheit ausgebildete Arbeitsflächenbearbeitungseinheit 56a mittels der Antriebseinheit 48a antreibbar. Ein Antrieb der als Mähwerkeinheit ausgebildeten Arbeitsflächenbearbeitungseinheit 56a mittels der Antriebseinheit 48a ist bedarfsweise zu- oder abschaltbar. Somit ist die Antriebseinheit 48a in einem Betriebsmodus des Serviceroboters 12a dazu vorgesehen, lediglich die Fahrwerkseinheit 54a zu einer Fortbewegung des Serviceroboters 12a anzutreiben. In zumindest einem weiteren Betriebsmodus des Serviceroboters 12a ist die Antriebseinheit 48a hingegen dazu vorgesehen, die Fahrwerkseinheit 54a und die als Mähwerkeinheit ausgebildete Arbeitsflächenbearbeitungseinheit 56a zumindest anzutreiben. Weitere, einem Fachmann als sinnvoll erscheinende Betriebsmodi zu einem Antrieb der Fahrwerkseinheit 54a und/oder der als Mähwerkeinheit ausgebildeten Arbeitsflächenbearbeitungseinheit 56a mittels der Antriebseinheit 48a sind ebenfalls denkbar.

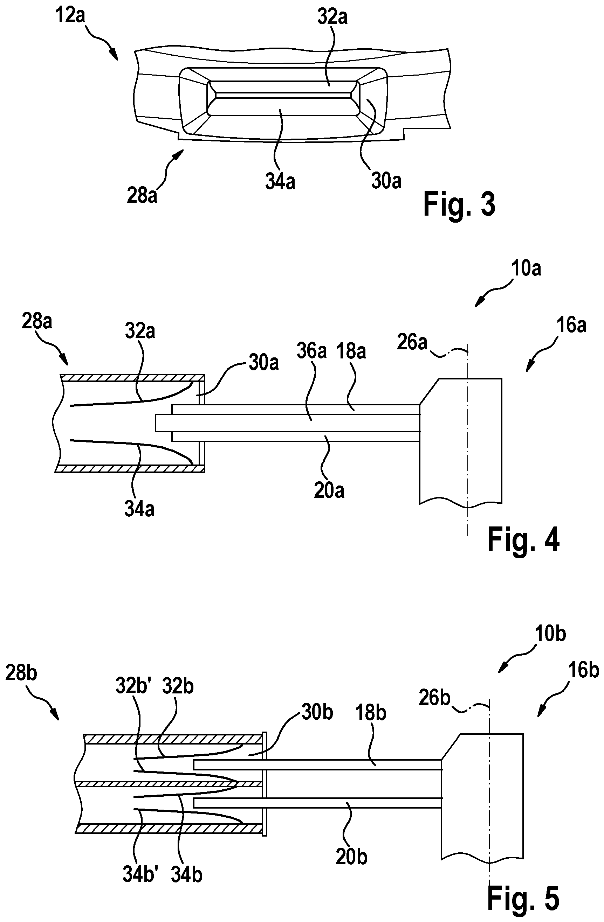

Die Steuer- und/oder Regeleinheit 50a ist zudem dazu vorgesehen, bei einer Erkennung eines niedrigen Energieinhalts der Energiespeichereinheit 14a ein Anfahren der Basisstation 16a des Serviceroboters 12a zu initiieren. Somit ist die Steuer- und/oder Regeleinheit 50a dazu vorgesehen, in Abhängigkeit von einem Energieinhalt der Energiespeichereinheit 14a einen Ladeandockprozess des Serviceroboters 12a an der Basisstation 16a zu initiieren. Hierbei sind die zumindest zwei Flachkontaktladeelemente 18a, 20a mit zumindest zwei Gegenkontaktelementen 32a, 34a einer Gegenkontakteinheit 28a des Servicerobotersystems 10a in Kontakt bringbar. Zu einer Kontaktierung sind die zumindest zwei Flachkontaktladeelemente 18a, 20a in eine Einführöffnung 30a der Gegenkontakteinheit 28a einführbar. Die Gegenkontakteinheit 28a ist am Serviceroboter 12a angeordnet. Es ist jedoch auch denkbar, dass die Gegenkontakteinheit 28a in einer alternativen Ausgestaltung des Servicerobotersystems 10a an der Basisstation 16a angeordnet ist und die zumindest zwei Flachkontaktladeelemente 18a, 20a an der Basisstation 16a angeordnet sind. Die zumindest zwei Flachkontaktladeelemente 18a, 20a sind dazu vorgesehen, einen Ladeandockprozess des Serviceroboters 12a an der Basisstation 16a zumindest in einem Winkelbereich von zumindest mehr als 15° zu ermöglichen. Hierbei sind die zumindest zwei Flachkontaktladeelemente 18a, 20a insbesondere mittels eines Zusammenwirkens mit den zumindest zwei Gegenkontaktelementen 32a, 34a dazu vorgesehen, einen Ladeandockprozess des Serviceroboters 12a an der Basisstation 16a zumindest in einem Winkelbereich von zumindest mehr als 15° zu ermöglichen. Der Ladeandockprozess des Serviceroboters 12a ist bezogen auf eine Zentrumsachse 22a der Basisstation 16a relativ zu einer Mittelachse 24a des Serviceroboters 12a in einem Winkelbereich von zumindest ± 7,5° ermöglichbar. Hierzu stehen die zumindest zwei Flachkontaktladeelemente 18a, 20a entlang zumindest einer Richtung über eine Außenwand eines Gehäuses der Basisstation 16a über. Hierbei stehen die zumindest zwei Flachkontaktladeelemente 18a, 20a entlang einer zumindest im Wesentlichen senkrecht zu einer Hochachse 26a der Basisstation 16a über eine Außenwand des Gehäuses der Basisstation 16a über, insbesondere um zumindest mehr als 20 mm. Die zumindest zwei Flachkontaktladeelemente 18a, 20a werden während des Ladeandockprozesses des Serviceroboters 12a von der Gegenkontakteinheit 28a aufgenommen. Die zumindest eine Gegenkontakteinheit 28a, die zu einer Aufnahme zumindest eines der zumindest zwei Flachkontaktladeelemente 18a, 20a vorgesehen ist, weist die Einführöffnung 30a auf, die eine minimale Breitenerstreckung aufweist, die zumindest einem Dreifachen einer maximalen Breitenerstreckung eines der zumindest zwei Flachkontaktladeelemente 18a, 20a entspricht (Figuren 1 und 3).

Figur 2 zeigt eine Detailansicht der zumindest zwei Flachkontaktladeelemente 18a, 20a der Basisstation 16a. Die zumindest zwei Flachkontaktladeelemente 18a, 20a sind vertikal versetzt zueinander angeordnet. Hierbei sind die zumindest zwei Flachkontaktladeelemente 18a, 20a, betrachtet entlang einer zumindest im Wesentlichen parallel zur Hochachse 26a der Basisstation 16a verlaufenden Richtung, relativ zueinander beabstandet angeordnet. Die zumindest zwei Flachkontaktladeelemente 18a, 20a sind zungenartig ausgebildet. Somit weisen die zumindest zwei Flachkontaktladeelemente 18a, 20a, betrachtet in einer sich zumindest im Wesentlichen senkrecht zur Hochachse 26a der Basisstation 16a erstreckenden Ebene, eine Längserstreckung auf, insbesondere eine zumindest im Wesentlichen senkrecht zu einer Außenwandfläche der Basisstation 16a verlaufende Längserstreckung, die um eine Vielfaches, insbesondere zumindest um ein Dreifaches, größer ist als eine Breitenerstreckung, insbesondere eine zumindest im Wesentlichen parallel zur Außenwandfläche der Basisstation 16a verlaufende Breitenerstreckung. Hierbei weisen die zumindest zwei Flachkontaktladeelemente 18a, 20a, betrachtet in einer sich zumindest im Wesentlichen parallel zur Hochachse 26a der Basisstation 16a erstreckenden Querschnittsebene, einen polygonalen Querschnitt auf, insbesondere einen rechteckigen Querschnitt. Es ist jedoch auch denkbar, dass die zumindest zwei Flachkontaktladeelemente 18a, 20a eine andere, einem Fachmann als sinnvoll erscheinende Querschnittsform aufweisen.

Des Weiteren sind die zumindest zwei Flachkontaktladeelemente 18a, 20a, betrachtet entlang der Hochachse 26a der Basisstation 16a, zumindest im Wesentlichen fluchtend zueinander angeordnet. Somit berührt eine zumindest im Wesentlichen parallel zu Hochachse 26a der Basisstation 16a verlaufende Linie, die sich ausgehend von einer Außenkante eines der zumindest zwei Flachkontaktladeelemente 18a, 20a in Richtung des weiteren der zumindest zwei Flachkontaktladeelemente 18a, 20a erstreckt, jeweils eine Außenkante der zumindest zwei Flachkontaktladeelemente 18a, 20a in zumindest einem Punkt.

Figur 3 zeigt eine Detailansicht der Gegenkontakteinheit 28a, die gemäß dem ersten Ausführungsbeispiel des Servicerobotersystems 10a am Serviceroboter 12a angeordnet ist. Die zumindest zwei Gegenkontaktelemente 32a, 34a der Gegenkontakteinheit 28a sind, betrachtet in einer zumindest im Wesentlichen senkrecht zur Hochachse 26a der Basisstation 16a verlaufenden Horizontalebene, flächig ausgebildet. Hierbei sind die zumindest zwei Gegenkontaktelemente 32a, 34a dazu vorgesehen, während eines Ladeprozesses an den zumindest zwei Flachkontaktladeelementen 18a, 20a anzuliegen. Die zumindest zwei Gegenkontaktelemente 32a, 34a weisen zu einer Ermöglichung eines Ladeandockprozesses des Serviceroboters 12a an der Basisstation 16a in einem Winkelbereich von zumindest mehr als 15° entlang einer zumindest im Wesentlichen quer zu einer Einführrichtung verlaufenden Richtung eine größte Flächenerstreckung auf. Die Einführrichtung entspricht einer Richtung, entlang der die zumindest zwei Flachkontaktladeelemente 18a, 20a in die Gegenkontakteinheit 28a einführbar sind. Die zumindest zwei Gegenkontaktelemente 32a, 34a sind hierbei als Blechkontaktelemente, insbesondere als Kupferblechkontaktelemente, ausgebildet. Es ist jedoch auch denkbar, dass die zumindest zwei Gegenkontaktelemente 32a, 34a eine andere, einem Fachmann als sinnvoll erscheinende Ausgestaltung aufweisen.

Ferner sind die zumindest zwei Gegenkontaktelemente 32a, 34a, betrachtet entlang einer zumindest im Wesentlichen parallel zur Hochachse 26a der Basisstation 16a verlaufenden Richtung, an jeweils einer Innenseite der Gegenkontakteinheit 28a angeordnet. Somit sind die zumindest zwei Gegenkontaktelemente 32a, 34a, betrachtet entlang der zumindest im Wesentlichen parallel zur Hochachse 26a der Basisstation 16a verlaufenden Richtung, an zwei einander gegenüberliegenden Seiten der Gegenkontakteinheit 28a angeordnet. Hierbei ist eines der zumindest zwei Gegenkontaktelemente 32a, 34a als ein positiver elektrischer Pol ausgebildet und eines der zumindest zwei Gegenkontaktelemente 32a, 34a ist als negativer elektrischer Pol ausgebildet. Somit sind die zumindest zwei Flachkontaktladeelemente 18a, 20a zu einer Herstellung eines elektrischen Kontakts zwischen die zumindest zwei Gegenkontaktelemente 32a, 34a einführbar (Figuren 2 und 4). Die zumindest zwei Flachkontaktladeelemente 18a, 20a berühren jeweils nur eines der zumindest zwei Gegenkontaktelemente 32a, 34a auf einer Seite.

Des Weiteren weist das Servicerobotersystem 10a zumindest ein Isolatorelement 36a auf, das zwischen den zumindest zwei Flachkontaktladeelementen 18a, 20a angeordnet ist und zumindest teilweise an den zumindest zwei Flachkontaktladeelementen 18a, 20a anliegt (Figuren 2 und 4). Das Isolatorelement 36a erstreckt sich zumindest entlang einer Richtung über zumindest eines der zumindest zwei Flachkontaktladeelemente 18a, 20a hinaus. Hierbei erstreckt sich das Isolatorelement 36a zumindest entlang einer zumindest im Wesentlichen senkrecht zur Hochachse 26a der Basisstation 16a verlaufenden Richtung über die zumindest zwei Flachkontaktladeelemente 18a, 20a hinaus. Somit kann vorteilhaft eine Berührung der zumindest zwei Flachkontaktladeelemente 18a, 20a mit einem starren elektrisch leitenden Bauteil zumindest weitestgehend vermieden werden. Somit kann eine Kurzschlussgefahr vorteilhaft gering gehalten werden.

Des Weiteren weist das Servicerobotersystem 10a zumindest eine Positionshalteeinheit 38a (Figur 1) auf, die dazu vorgesehen ist, den Serviceroboter 12a zumindest in einer Ladeposition relativ zur Basisstation 16a zu halten. Hierzu umfasst die Positionshalteeinheit 38a zumindest ein an der Basisstation 16a angeordnetes Positionshalteelement 58a (Figur 1). Das Positionshalteelement 58a ist hierbei als Ausnehmung, insbesondere als eine Vertiefung, in einer Bodenplatte 64a der Basisstation 16a ausgebildet, in der zumindest ein Rad der Fahrwerkseinheit 54a in einer Ladeposition des Serviceroboters 12a anordenbar ist. Somit ist der Serviceroboter 12a zumindest mittels einer formschlüssigen Verbindung zwischen zumindest einem Rad der Fahrwerkseinheit 54a und der Bodenplatte 64a der Basisstation 16a zumindest in einer Ladeposition relativ zur Basisstation 16a haltbar. Es ist jedoch auch denkbar, dass das Positionshalteelement 58a eine andere, einem Fachmann als sinnvoll erscheinende Ausgestaltung aufweist, wie beispielsweise eine Ausgestaltung als Magnetelement (Permanent- oder Elektromagnet), als mechanisches Verriegelungselement o. dgl.

Des Weiteren ist mittels der Bodenplatte 64a der Basisstation 16a zumindest in einer Ladeposition und/oder während des Ladeandockprozesses eine korrekte Höhenausrichtung der zumindest zwei Flachkontaktladeelemente 18a, 20a relativ zu den zumindest zwei Gegenkontaktelementen 32a, 34a erreichbar. Der Serviceroboter 12a fährt hierbei während eines Ladeandockprozesses zumindest teilweise auf die Bodenplatte 64a der Basisstation 16a. Somit ist vorteilhaft eine korrekte Höhenausrichtung der zumindest zwei Flachkontaktladeelemente 18a, 20a relativ zu den zumindest zwei Gegenkontaktelementen 32a, 34a selbst bei einem unebenen Untergrund, auf dem die Basisstation 16a anordenbar ist, erreichbar. Die Bodenplatte 64a der Basisstation 16a kann ferner zumindest ein Untergrundbefestigungselement (hier nicht näher dargestellt), wie beispielsweise einen Erdspieß oder einen Erdnagel, aufweisen. Somit kann vorteilhaft ein sicherer Stand der Basisstation 16a erreicht werden. Es kann somit vorteilhaft eine Bewegung der Basisstation 16a, wie beispielsweise infolge eines Befahrens der Bodenplatte 64a der Basisstation 16a durch den Serviceroboter 12a, relativ zu einem Untergrund zumindest weitestgehend vermieden werden. Zudem kann vorteilhaft eine Kippgefahr und/oder eine Verdrehgefahr der Basisstation 16a gering gehalten werden.

Zu einer Sicherstellung, dass in zumindest einem Zustand, insbesondere in einem unverbundenen Zustand der zumindest zwei Flachkontaktladeelemente 18a, 20a und der zumindest zwei Gegenkontaktelemente 32a, 34a, keine gefährliche Spannung an den zumindest zwei Flachkontaktladeelementen 18a, 20a und/oder an den zumindest zwei Gegenkontaktelementen 32a, 34a anliegt, ist es beispielsweise denkbar, dass das Servicerobotersystem 10a mit einer sicheren Spannung, wie beispielsweise mittels einer Schutzkleinspannung, betreibbar ist. Hierbei ist es denkbar, dass an den zumindest zwei Flachkontaktladeelementen 18a, 20a und/oder an den zumindest zwei Gegenkontaktelementen 32a, 34a lediglich in einem Nichtladezustand eine sichere Spannung anliegt und bei einer Erkennung einer korrekten Kontaktierung der zumindest zwei Flachkontaktladeelemente 18a, 20a und der zumindest zwei Gegenkontaktelemente 32a, 34a eine höhere Ladespannung an den zumindest zwei Flachkontaktladeelementen 18a, 20a und an den zumindest zwei Gegenkontaktelementen 32a, 34a anliegt. Die Erkennung einer korrekten Kontaktierung und/oder eine Freischaltung einer Ladespannung kann hierbei mittels einer elektrischen Kommunikation, mittels einer optischen Kommunikation, mittels einer Funkkommunikation, wie beispielsweise RFID, NFC o. dgl., mittels einer magnetischen Codierung, mittels einer optischen Codierung (Kamera, Sensor o. dgl.), mittels einer mechanischen Codierung o. dgl. erfolgen.

Des Weiteren weist das Servicerobotersystem 10a zumindest eine Datenloggereinheit 44a (Figur 1) auf, die dazu vorgesehen ist, zumindest eine Ladekenngröße von zumindest zwei unterschiedlichen Servicerobotern 12a zu loggen und auszuwerten. Die Datenloggereinheit 44a ist dazu vorgesehen, zumindest eine Ladekenngröße, insbesondere einen fließenden Strom, während eines Ladeprozesses zu loggen. Hierbei ist die Datenloggereinheit 44a am Serviceroboter 12a angeordnet. Die mittels der Datenloggereinheit 44a geloggten Ladekenngrößen sind mittels einer Powerline-Kommunikation über die zumindest zwei Flachkontaktladeelemente 18a, 20a und über die zumindest zwei Gegenkontaktelemente 32a, 34a oder mittels einer Kommunikationseinheit, insbesondere einer drahtlosen Kommunikationseinheit, an die Basisstation 16a oder an ein externes Auslesegerät (hier nicht näher dargestellt) übertragbar. Bei der Powerline-Kommunikation ist es denkbar, dass verschiedenen Servicerobotern 12a verschiedene Frequenzen oder Codes zur Unterscheidung zuordenbar sind. Somit kann beispielsweise vorteilhaft erfasst werden, welcher Serviceroboter 12a wieviel Strom verbraucht. Zudem ist es mittels einer Kommunikation zwischen dem Serviceroboter 12a und der Basisstation 16a möglich, dass ein Laden von verschiedenen Energiespeichervarianten, wie beispielsweise Low- und High-Power-Varianten, der unterschiedlichen Serviceroboter 12a erfolgen kann. Das Laden von verschiedenen Energiespeichervarianten an der Basisstation 16a kann hierbei zeitlich getrennt oder gleichzeitig erfolgen.

Ferner umfasst die Basisstation 16a zumindest eine Hilfsstoffbetankungseinheit 46a, die dazu vorgesehen ist, zumindest den Serviceroboter 12a in zumindest einem Zustand mit zumindest einem Hilfsstoff zu betanken. Die Hilfsstoffbetankungseinheit 46a umfasst hierzu zumindest ein Betankungselement 60a, das mit einem Betankungsstutzen 62a des Serviceroboters 12a verbindbar ist. Der Betankungsstutzen 62a weist hierbei eine trichterförmige Ausgestaltung auf. Eine maximale Einführöffnungsbreitenerstreckung des Betankungsstutzens 62a ist zumindest dreimal größer als eine maximale Breitenerstreckung des Betankungselements 60a. Hierdurch kann vorteilhaft eine Betankung eines Hilfsstoffbehälters (hier nicht näher dargestellt) des Serviceroboters 12a aus unterschiedlichen Richtungen erfolgen. Die Hilfsstoffbetankungseinheit 46a ist an einer Seite der Basisstation 16a angeordnet, die einer weiteren Seite der Basisstation 16a, an der die zumindest zwei Flachkontaktladeelemente 18a, 20a angeordnet sind, abgewandt ist. Es ist jedoch auch denkbar, dass die Hilfsstoffbetankungseinheit 46a an der weiteren Seite der Basisstation 16a angeordnet ist, an der die zumindest zwei Flachkontaktladeelemente 18a, 20a angeordnet sind. Somit kann in einem an der Basisstation 16a angeordneten Zustand des Serviceroboters 12a eine Betankung des Serviceroboters 12a mit einem Hilfsstoff erfolgen und es kann eine zeitgleiche Ladung der Energiespeichereinheit 14a erfolgen.

In Figuren 5 bis 13 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 13 ist der Buchstabe a durch die Buchstaben b bis h ersetzt.

Figur 5 zeigt eine Detailansicht einer alternativen Ausgestaltung von zumindest zwei Flachkontaktladeelementen 18b, 20b und einer Gegenkontakteinheit 28b eines Servicerobotersystems 10b. Im Unterschied zu dem in den Figuren 1 bis 4 beschriebenen Ausführungsbeispiel weist das Servicerobotersystem 10b kein physisches Isolatorelement auf, das zwischen den zumindest zwei Flachkontaktladeelementen 18b, 20b angeordnet ist. Die zumindest zwei Flachkontaktladeelemente 18b, 20b sind, betrachtet entlang einer zumindest im Wesentlichen parallel zu einer Hochachse 26b einer Basisstation 16b des Servicerobotersystems 10b verlaufenden Richtung, vertikal versetzt zueinander angeordnet. Hierbei ist, betrachtet entlang der zumindest im Wesentlichen parallel zur Hochachse 26b der Basisstation 16b verlaufenden Richtung, zwischen den zumindest zwei Flachkontaktladeelementen 18b, 20b ein Luftspalt angeordnet. Somit sind die zumindest zwei Flachkontaktladeelemente 18b, 20b, betrachtet entlang der zumindest im Wesentlichen parallel zur Hochachse 26b der Basisstation 16b verlaufenden Richtung, relativ zueinander beabstandet angeordnet.

Die Gegenkontakteinheit 28b weist zu einer Kontaktierung der zumindest zwei Flachkontaktladeelemente 18b, 20b mit Gegenkontaktelementen 32b, 32b', 34b, 34b' der Gegenkontakteinheit 28b zwei Kontaktaufnahmeräume auf, wobei jeweils zumindest eines der Gegenkontaktelemente 32b, 32b', 34b, 34b' in einem der Kontaktaufnahmeräume angeordnet ist. In dem in Figur 5 dargestellten Ausführungsbeispiel des Servicerobotersystems 10b sind jeweils zumindest zwei Gegenkontaktelemente 32b, 32b', 34b, 34b' in einem der Kontaktaufnahmeräume angeordnet. Somit bilden jeweils zumindest zwei Gegenkontaktelemente 32b, 32b', 34b, 34b' einen positiven elektrischen Pol und einen negativen elektrischen Pol der Gegenkontakteinheit 28b. Somit ist jeweils eines der zumindest zwei Flachkontaktladeelemente 18b, 20b in einem mit den Gegenkontaktelementen 32b, 32b', 34b, 34b' kontaktierten Zustand zwischen zumindest zwei der Gegenkontaktelemente 32b, 32b', 34b, 34b' angeordnet. Hinsichtlich weiterer Funktionen und Merkmale des in der Figur 5 zumindest teilweise dargestellten Servicerobotersystems 10b darf auf das in den Figuren 1 bis 4 dargestellte Servicerobotersystem 10a verwiesen werden.

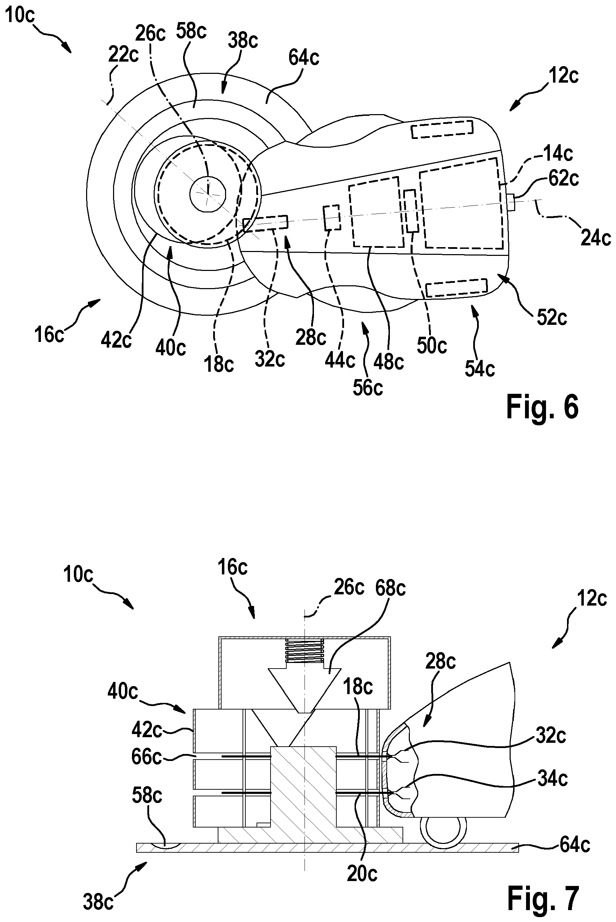

Figur 6 zeigt ein alternatives Servicerobotersystem 10c mit zumindest einem Serviceroboter 12c, der zumindest eine Energiespeichereinheit 14c umfasst, und mit zumindest einer Basisstation 16c zumindest zu einer Energiespeisung der Energiespeichereinheit 14c in zumindest einem Zustand, wobei der Serviceroboter 12c oder die Basisstation 16c zumindest zwei Flachkontaktladeelemente 18c, 20c aufweist. In dem in Figur 6 dargestellten Ausführungsbeispiel weist die Basisstation 16c die zumindest zwei Flachkontaktladeelemente 18c, 20c auf. Die zumindest zwei Flachkontaktladeelemente 18c, 20c sind vertikal versetzt zueinander angeordnet. Nicht erfindungsgemäß sind die sind die zumindest zwei Flachkontaktladeelemente 18c, 20c scheibenartig ausgebildet. Hierbei weisen die zumindest zwei Flachkontaktladeelemente 18c, 20c, betrachtet in einer sich zumindest im Wesentlichen senkrecht zu einer Hochachse 26c der Basisstation 16c erstreckenden Ebene, eine nicht erfindungsgemäße kreisringartige Ausgestaltung auf. Somit erstrecken sich die zumindest zwei Flachkontaktladeelemente 18c, 20c entlang einer um die Hochachse 26c der Basisstation 16c verlaufenden Umfangsrichtung zumindest zu mehr als 50 % einer Gesamtumfangserstreckung eines Teilbereichs der Basisstation 16c um den Teilbereich der Basisstation 16c herum. Besonders bevorzugt erstrecken sich die zumindest zwei Flachkontaktladeelemente 18c, 20c entlang der um die Hochachse 26c der Basisstation 16c verlaufenden Umfangsrichtung zumindest komplett um den Teilbereich der Basisstation 16c herum. Die Basisstation 16c weist hierbei eine kreiszylindrische Ausgestaltung auf.

Des Weiteren umfasst das Servicerobotersystem 10c zumindest eine Kontaktberührschutzeinheit 40c, die zumindest ein beweglich gelagertes Kontaktberührschutzelement 42c aufweist, das dazu vorgesehen ist, zumindest eines der zumindest zwei Flachkontaktladeelemente 18c, 20c in zumindest einem Zustand abzudecken. Das Kontaktberührschutzelement 42c ist hierbei beweglich an der Basisstation 16c gelagert. Hierbei ist das Kontaktberührschutzelement 42c translatorisch beweglich an der Basisstation 16c gelagert, insbesondere entlang einer zumindest im Wesentlichen senkrecht zur Hochachse 26c der Basisstation 16c verlaufenden Richtung. Das Kontaktberührschutzelement 42c weist eine hohlkreiszylindrische Ausgestaltung auf. Zudem weist das Kontaktberührschutzelement 42c zumindest eine Durchtrittöffnung 66c auf, die dazu vorgesehen ist, infolge einer Bewegung des Kontaktberührschutzelements 42c relativ zu den zumindest zwei Flachkontaktladeelementen 18c, 20c ein Durchgreifen der zumindest zwei Flachkontaktladeelemente 18c, 20c durch das Kontaktberührschutzelement 42c zu ermöglichen und/oder ein Hinauserstrecken der zumindest zwei Flachkontaktladeelemente 18c, 20c über das Kontaktberührschutzelement 42c zu ermöglichen. Ferner ist das Kontaktberührschutzelement 42c infolge eines Ladeandockprozesses des Serviceroboters 12c an der Basisstation 16c bewegbar. Hierbei ist das Kontaktberührschutzelement 42c infolge eines direkten Kontakts des Serviceroboters 12c und des Kontaktberührschutzelements 42c translatorisch bewegbar. Es ist jedoch auch denkbar, dass die Kontaktberührschutzeinheit 40c zumindest ein Aktorelement zu einer Bewegung des Kontaktberührschutzelements 42c aufweist, wobei das Aktorelement das Kontaktberührschutzelement 42c infolge einer Kommunikation des Serviceroboters 12c mit der Basisstation 16c bewegt.

Des Weiteren umfasst die Kontaktberührschutzeinheit 40c zumindest ein Rückstellelement 68c (Figur 7), das dazu vorgesehen ist, das Kontaktberührschutzelement 42c selbsttätig in eine Überdeckposition zu bewegen, insbesondere nachdem der Serviceroboter 12c seine Ladeposition verlassen hat. In der Überdeckposition sind die zumindest zwei Flachkontaktladeelemente 18c, 20c vollständig innerhalb des Kontaktberührschutzelements 42c angeordnet. Das Rückstellelement 68c ist hierbei als federbelasteter Zentrierkegel ausgebildet, der entlang einer zumindest im Wesentlichen parallel zur Hochachse 26c der Basisstation 16c verlaufenden Richtung beweglich gelagert ist, insbesondere translatorisch beweglich gelagert. Es ist jedoch auch denkbar, dass das Rückstellelement 68c eine andere, einem Fachmann als sinnvoll erscheinende Ausgestaltung und/oder Anordnung aufweist. Das Rückstellelement 68c kann zudem mittels eines weiteren Aktorelements der Kontaktberührschutzeinheit 40c beaufschlagbar sein, wobei das weitere Aktorelement dazu vorgesehen ist, eine Bewegungsmöglichkeit des Rückstellelements 68c und somit des Kontaktberührschutzelements 42c zu begrenzen oder zu vermeiden. Hierdurch kann vorteilhaft erreicht werden, dass das weitere Aktorelement erst nach einer Übermittlung eines Freigabecodes von dem Serviceroboter 12c an die Basisstation 16c eine Bewegungsmöglichkeit des Kontaktberührschutzelements 42c freigibt. Somit kann vorteilhaft ein unberechtigter Ladeprozess verhindert werden. Hinsichtlich weiterer Funktionen und Merkmale des in den Figuren 6 und 7 dargestellten Servicerobotersystems 10c darf auf das in den Figuren 1 bis 4 dargestellte Servicerobotersystem 10a verwiesen werden.

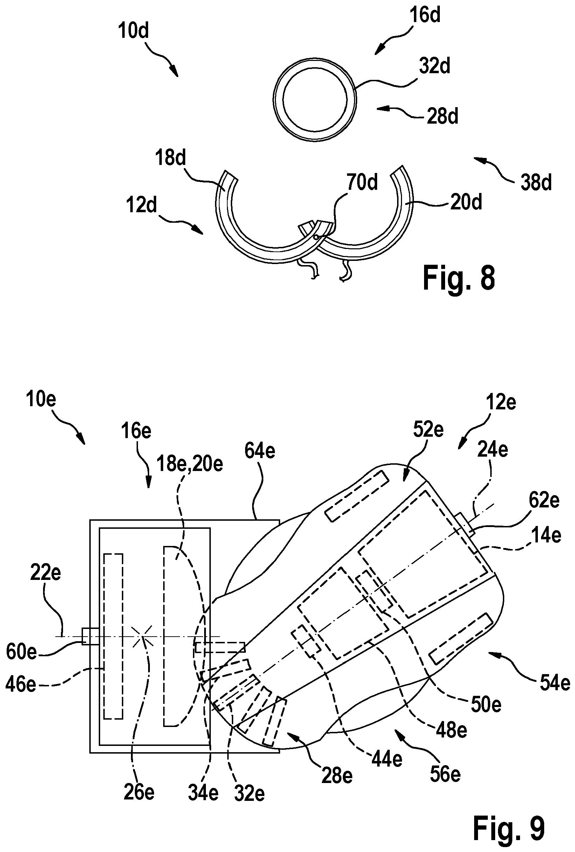

Figur 8 zeigt eine Detailansicht einer alternativen Ausgestaltung von zumindest zwei Flachkontaktladeelementen 18d, 20d und einer Gegenkontakteinheit 28d eines Servicerobotersystems 10d. Im Unterschied zu dem in den Figuren 1 bis 4 beschriebenen Ausführungsbeispiel weist das Servicerobotersystem 10d die zumindest zwei Flachkontaktladeelemente 18d, 20d auf, die relativ zueinander beweglich gelagert sind. Hierbei sind die zumindest zwei Flachkontaktladeelemente 18d, 20d mittels zumindest eines Gelenkelements 70d des Servicerobotersystems 10d zangenartig miteinander verbunden. Die zumindest zwei Flachkontaktladeelemente 18d, 20d weisen eine nicht erfindungsgemäße halbkreisringartige Ausgestaltung auf. Ferner sind die zumindest zwei Flachkontaktladeelemente 18d, 20d dazu vorgesehen, die Gegenkontakteinheit 28d zumindest teilweise zu umgreifen. Die Gegenkontakteinheit 28d weist eine kreiszylindrische Ausgestaltung auf. Hierbei erstreckt sich die Gegenkontakteinheit 28d, die zu einer Aufnahme zumindest eines der zumindest zwei Flachkontaktladeelemente 18d, 20d vorgesehen ist, zumindest über einen Winkelbereich von mehr als 30°. Insbesondere erstreckt sich die Gegenkontakteinheit 28d zumindest über einen Winkelbereich von mehr als 180°, bevorzugt über einen Winkelbereich von mehr als 270° und besonders bevorzugt über einen Winkelbereich von mehr als 300°. Vorzugsweise ist die Gegenkontakteinheit 28d an einer Außenseite einer Basisstation 16d des Servicerobotersystems 10d angeordnet. Somit weist die Basisstation 16d ebenfalls eine kreiszylindrische Ausgestaltung auf. Ferner weist das Servicerobotersystem 10d zumindest ein Aktorelement (hier nicht näher dargestellt) zu einer Bewegung der zumindest zwei Flachkontaktladeelemente 18d, 20d relativ zueinander auf. Somit kann hierdurch eine Positionshalteeinheit 38d des Servicerobotersystems 10d realisiert werden. Zudem kann eine Diebstahlsicherungsfunktion realisiert werden, wobei die zumindest zwei Flachkontaktladeelemente 18d, 20d nach einem Umgreifen der Gegenkontakteinheit 28d beispielsweise erst nach einer Eingabe eines Sicherheitscodes wieder relativ zueinander bewegbar sind. Hinsichtlich weiterer Funktionen und Merkmale des in der Figur 8 zumindest teilweise dargestellten Servicerobotersystems 10d darf auf das in den Figuren 1 bis 4 dargestellte Servicerobotersystem 10a verwiesen werden.

Figur 9 zeigt ein weiteres alternatives Servicerobotersystem 10e mit zumindest einem Serviceroboter 12e, der zumindest eine Energiespeichereinheit 14e umfasst, und mit zumindest einer Basisstation 16e zumindest zu einer Energiespeisung der Energiespeichereinheit 14e in zumindest einem Zustand, wobei der Serviceroboter 12e oder die Basisstation 16e zumindest zwei Flachkontaktladeelemente 18e, 20e aufweist. In dem in Figur 9 dargestellten Ausführungsbeispiel weist die Basisstation 16e die zumindest zwei Flachkontaktladeelemente 18e, 20e auf. Die zumindest zwei Flachkontaktladeelemente 18e, 20e sind plattenartig ausgebildet. Hierbei weisen die zumindest zwei Flachkontaktladeelemente 18e, 20e, betrachtet in einer sich zumindest im Wesentlichen senkrecht zu einer Hochachse 26e der Basisstation 16e erstreckenden Ebene, eine nicht erfindungsgemäße ellipsensektorartige Ausgestaltung auf. Hierbei ist jeweils ein bogenförmiger Teil der zumindest zwei Flachkontaktladeelemente 18e, 20e, die ellipsensektorartig ausgestaltet sind einer längsten Seite der Basisstation 16e zugeordnet. Die Basisstation 16e weist, betrachtet in der sich zumindest im Wesentlichen senkrecht zur Hochachse 26e der Basisstation 16e erstreckenden Ebene, eine polygonale, insbesondere rechteckige, Ausgestaltung auf. Das Servicerobotersystem 10e kann hierbei eine Kontaktberührschutzeinheit (hier nicht näher dargestellt) umfassen, die eine zumindest im Wesentlichen analoge Ausgestaltung zu der in den Figuren 6 und 7 dargestellte Kontaktberührschutzeinheit 40c aufweist. Es ist jedoch auch denkbar, dass die Kontaktberührschutzeinheit des in Figur 9 dargestellten Servicerobotersystems 10e eine andere, einem Fachmann als sinnvoll erscheinende Ausgestaltung aufweist.
Der Serviceroboter 12e weist eine Gegenkontakteinheit 28e zu einer Aufnahme und/oder zu einer Kontaktierung der zumindest zwei Flachkontaktladeelemente 18e, 20e auf. Hierbei weist die Gegenkontakteinheit 28e eine Vielzahl an Gegenkontaktelementen 32e, 34e auf, die an einer Vorderseite des Serviceroboters 12e angeordnet sind. Die Gegenkontaktelemente 32e, 34e sind zumindest über einen Winkelbereich von mehr als 30° gleichmäßig verteilt an der Vorderseite des Serviceroboters 12e angeordnet. Es ist jedoch auch denkbar, dass die Gegenkontaktelemente 32e, 34e zumindest über einen Winkelbereich von mehr als 30° ungleichmäßig verteilt an der Vorderseite des Serviceroboters 12e angeordnet sind. Die Gegenkontakteinheit 28e erstreckt sich somit zumindest über einen Winkelbereich von mehr als 30° am Serviceroboter 12e.

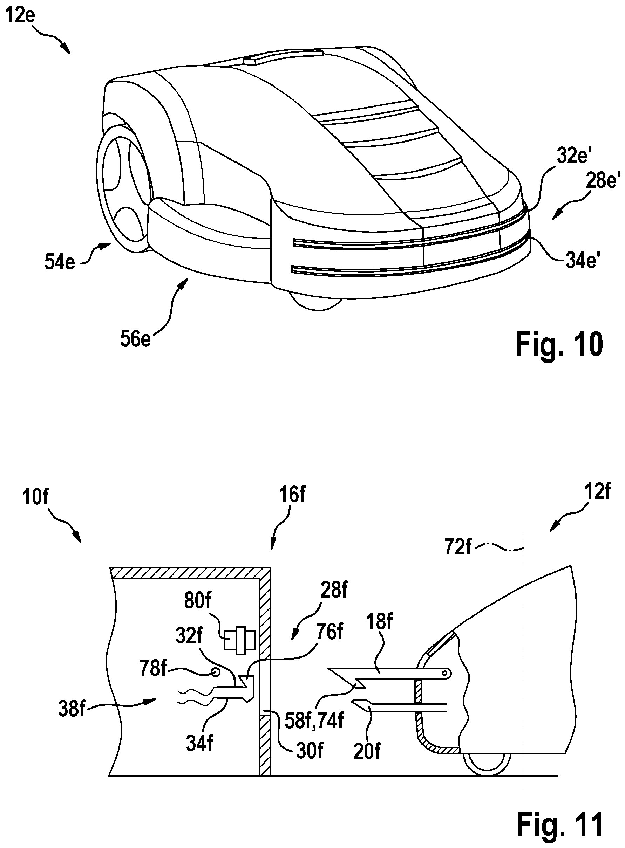

Figur 10 zeigt eine Detailansicht des Serviceroboters 12e des in Figur 9 dargestellten Servicerobotersystems 10e mit einer alternativen Ausgestaltung einer Gegenkontakteinheit 28e'. Die Gegenkontakteinheit 28e' umfasst hierbei zumindest zwei Gegenkontaktelemente 32e', 34e', die kreisbogenförmig am Serviceroboter 12e angeordnet sind, insbesondere an einer Vorderseite des Serviceroboters 12e. Hierbei erstrecken sich die zumindest zwei Gegenkontaktelemente 32e', 34e' zumindest über einen Winkelbereich von mehr als 45° am Serviceroboter 12e, insbesondere an einer Vorderseite des Serviceroboters 12e. Die Gegenkontakteinheit 28e' bildet hierbei schlitzförmige Aufnahmen für die zumindest zwei Flachkontaktladeelemente 18e, 20e. Hinsichtlich weiterer Funktionen und Merkmale des in den Figuren 9 und 10 dargestellten Servicerobotersystems 10e darf auf das in den Figuren 1 bis 4 dargestellte Servicerobotersystem 10a verwiesen werden.

Figur 11 zeigt ein weiteres alternatives Servicerobotersystem 10f mit zumindest einem Serviceroboter 12f, der zumindest eine Energiespeichereinheit 14f umfasst, und mit zumindest einer Basisstation 16f zumindest zu einer Energiespeisung der Energiespeichereinheit 14f in zumindest einem Zustand, wobei der Serviceroboter 12f oder die Basisstation 16f zumindest zwei Flachkontaktladeelemente 18f, 20f aufweist. In dem in Figur 11 dargestellten Ausführungsbeispiel weist der Serviceroboter 12f die zumindest zwei Flachkontaktladeelemente 18f, 20f auf. Die zumindest zwei Flachkontaktladeelemente 18f, 20f sind zungenartig ausgebildet. Zudem sind die zumindest zwei Flachkontaktladeelemente 18f, 20f relativ zueinander beweglich gelagert. Eine Bewegungsachse zumindest eines der zumindest zwei Flachkontaktladeelemente 18f, 20f verläuft hierbei zumindest im Wesentlichen senkrecht zu einer Hochachse 72f des Serviceroboters 12f.

Des Weiteren umfasst das Servicerobotersystem 10f zumindest eine Positionshalteeinheit 38f, die dazu vorgesehen ist, den Serviceroboter 12f zumindest in einer Ladeposition relativ zur Basisstation 16f zu halten. Die Positionshalteeinheit 38f umfasst hierzu zumindest ein Rastelement 74f. Das Rastelement 74f ist als Rasthaken ausgebildet. Hierbei ist das Rastelement 74f einteilig mit einem der zumindest zwei Flachkontaktladeelemente 18f, 20f ausgebildet, insbesondere mit dem beweglich gelagerten Flachkontaktladeelement 18f. Somit bildet das Rastelement 74f ein Positionshalteelement 58f der Positionshalteeinheit 38f. Das Rastelement 74f ist auf einer dem Serviceroboter 12f abgewandten Seite an einem der zumindest zwei Flachkontaktladeelemente 18f, 20f angeordnet. Das Rastelement 74f ist dazu vorgesehen, mit einem korrespondierend zum Rastelement 74f ausgebildeten Gegenrastelement 76f der Positionshalteeinheit 38f zu einem Halten des Serviceroboters 12f zumindest in einer Ladeposition relativ zur Basisstation 16f zusammenzuwirken, insbesondere mittels einer formschlüssigen und/oder einer kraftschlüssigen Verbindung. Das Gegenrastelement 76f ist hierzu an der Basisstation 16f angeordnet. Hierbei ist das Gegenrastelement 76f an einem Gegenkontaktelement 32f einer Gegenkontakteinheit 28f des Servicerobotersystems 10f angeordnet.

Zu einem Halten des Serviceroboters 12f zumindest in einer Ladeposition relativ zur Basisstation 16f ist das Rastelement 74f bei einer Kontaktierung der zumindest zwei Flachkontaktladeelemente 18f, 20f mit der Gegenkontakteinheit 28f in Eingriff mit dem Gegenrastelement 76f bringbar. Hierbei wird das beweglich gelagerte Flachkontaktladeelement 18f bei einer Einführung in eine Einführöffnung 30f der Gegenkontakteinheit 28f infolge eines Zusammenwirkens einer Schrägfläche des Rastelements 74f mit dem Gegenrastelement 76f ausgelenkt. Die zumindest zwei Flachkontaktladeelemente 18f, 20f werden bis zu einem Stattfinden eines Eingriffs des Rastelements 74f in das Gegenrastelement 76f in die Gegenkontakteinheit 28f hineinbewegt. Eine Bewegung des Serviceroboters 12f in eine von der Basisstation 16f abgewandte Richtung ist somit infolge eines Eingriffs des Rastelements 74f in das Gegenrastelement 76f unterbunden. Zu einer Lösung der Verbindung des Rastelements 74f und des Gegenrastelements 76f, insbesondere nach einer Beendigung eines Ladeprozesses, ist eine weitere Bewegung der zumindest zwei Flachkontaktladeelemente 18f, 20f in eine der Basisstation 16f zugewandte Richtung erforderlich. Hierdurch ist das beweglich gelagerte Flachkontaktladeelement 18f mit einem Entriegelungselement 78f der Positionshalteeinheit 38f in Kontakt bringbar. Infolge eines Zusammenwirkens der Schrägfläche des Rastelements 74f und des Entriegelungselements 78f ist das beweglich gelagerte Flachkontaktladeelement 18f erneut auslenkbar. Zu einem Halten des beweglich gelagerten Flachkontaktladeelements 18f in einer ausgelenkten Position, insbesondere zumindest bis die zumindest zwei Flachkontaktladeelemente 18f, 20f aus der Gegenkontakteinheit 28f herausbewegt sind, weist die Positionshalteeinheit 38f zumindest ein Auslenkhalteelement 80f auf. Das Auslenkhalteelement 80f kann hierbei als Elektromagnet oder als Permanentmagnet ausgebildet sein. Es ist jedoch auch denkbar, dass die Positionshalteeinheit 38f zumindest ein Aktorelement umfasst, das dazu vorgesehen ist, das beweglich gelagerte Flachkontaktladeelement 18f automatisch auszulenken, insbesondere nach einer Beendigung eines Ladeprozesses. Das Aktorelement kann hierbei am Serviceroboter 12f oder an der Basisstation 16f angeordnet sein. Hinsichtlich weiterer Funktionen und Merkmale des in Figur 11 dargestellten Servicerobotersystems 10f darf auf das in den Figuren 1 bis 4 dargestellte Servicerobotersystem 10a verwiesen werden.

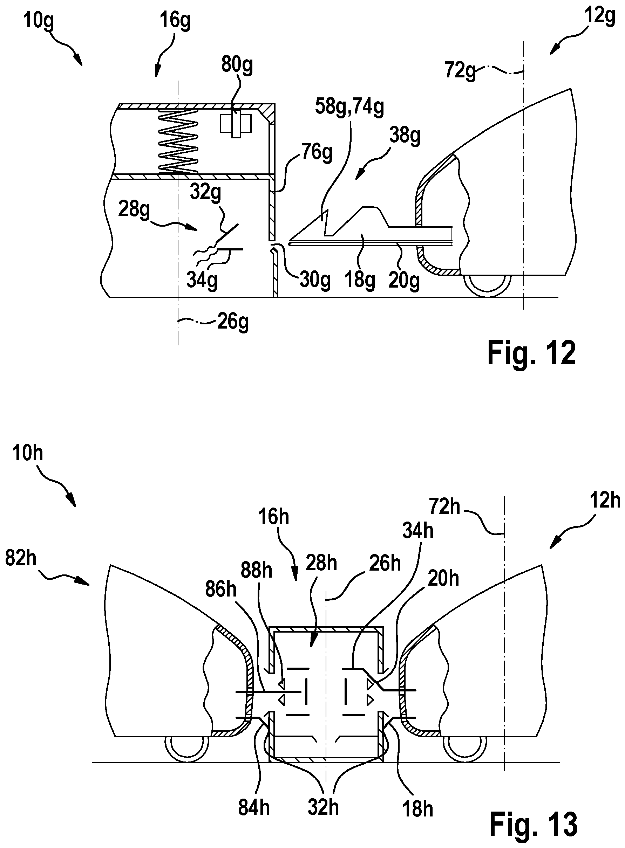

Figur 12 zeigt ein weiteres alternatives Servicerobotersystem 10g mit zumindest einem Serviceroboter 12g, der zumindest eine Energiespeichereinheit 14g umfasst, und mit zumindest einer Basisstation 16g zumindest zu einer Energiespeisung der Energiespeichereinheit 14g in zumindest einem Zustand, wobei der Serviceroboter 12g oder die Basisstation 16g zumindest zwei Flachkontaktladeelemente 18g, 20g aufweist. In dem in Figur 12 dargestellten Ausführungsbeispiel weist der Serviceroboter 12g die zumindest zwei Flachkontaktladeelemente 18g, 20g auf. Die zumindest zwei Flachkontaktladeelemente 18g, 20g sind zungenartig ausgebildet.

Des Weiteren umfasst das Servicerobotersystem 10g zumindest eine Positionshalteeinheit 38g, die dazu vorgesehen ist, den Serviceroboter 12g zumindest in einer Ladeposition relativ zur Basisstation 16g zu halten. Die Positionshalteeinheit 38g umfasst hierzu zumindest ein Rastelement 74g. Das Rastelement 74g ist als Rasthaken ausgebildet. Hierbei ist das Rastelement 74g einteilig mit einem der zumindest zwei Flachkontaktladeelemente 18g, 20g ausgebildet. Somit bildet das Rastelement 74g ein Positionshalteelement 58g der Positionshalteeinheit 38g. Das Rastelement 74g ist auf einer dem Serviceroboter 12g abgewandten Seite an einem der zumindest zwei Flachkontaktladeelemente 18g, 20g angeordnet. Das Rastelement 74g ist dazu vorgesehen, mit einem korrespondierend zum Rastelement 74g ausgebildeten Gegenrastelement 76g der Positionshalteeinheit 38g zu einem Halten des Serviceroboters 12g zumindest in einer Ladeposition relativ zur Basisstation 16g zusammenzuwirken, insbesondere mittels einer formschlüssigen und/oder einer kraftschlüssigen Verbindung. Das Gegenrastelement 76g ist hierzu an der Basisstation 16g angeordnet. Hierbei ist das Gegenrastelement 76g beweglich an der Basisstation 16g gelagert. Das Gegenrastelement 76g ist translatorisch beweglich gelagert, insbesondere entlang einer zumindest im Wesentlichen parallel zu einer Hochachse 26g der Basisstation 16g verlaufenden Richtung. Das Gegenrastelement 76g ist hierbei dazu vorgesehen, eine Einführöffnung 30g einer Gegenkontakteinheit 28g zumindest zu einem Großteil abzudecken und/oder zu verschließen.

Zu einem Halten des Serviceroboters 12g zumindest in einer Ladeposition relativ zur Basisstation 16g ist das Rastelement 74g bei einer Kontaktierung der zumindest zwei Flachkontaktladeelemente 18g, 20g mit der Gegenkontakteinheit 28g in Eingriff mit dem Gegenrastelement 76g bringbar. Hierzu werden die zumindest zwei Flachkontaktladeelemente 18g, 20g in die Gegenkontakteinheit 28g eingeführt. Das Rastelement 74g umfasst zu einer Bewegung des Gegenrastelements 76g und zu einer Freigabe der Einführöffnung 30g zumindest eine Schrägfläche. Die Schrägfläche bewegt das Gegenrastelement 76g infolge eines Zusammenwirkens der Schrägfläche und des Gegenrastelements 76g in eine zumindest im Wesentlichen quer zu einer Einführrichtung verlaufende Richtung. Das Gegenrastelement 76g ist zudem mittels eines Federelements der Positionshalteeinheit 38g in Richtung des Rastelements 74g mit einer Kraft beaufschlagt. Die zumindest zwei Flachkontaktladeelemente 18g, 20g werden bis zu einem Stattfinden eines Eingriffs des Gegenrastelements 76g in eine Rastausnehmung des Rastelements 74g in die Gegenkontakteinheit 28g hineinbewegt, insbesondere infolge einer Kraft des Federelements. Eine Bewegung des Serviceroboters 12g in eine von der Basisstation 16g abgewandte Richtung ist somit infolge eines Eingriffs des Gegenrastelements 76g in die Rastausnehmung des Rastelements 74g unterbunden. Zu einer Lösung der Verbindung des Gegenrastelements 76g und des Rastelements 74g, insbesondere nach einer Beendigung eines Ladeprozesses, ist eine weitere Bewegung der zumindest zwei Flachkontaktladeelemente 18g, 20g in eine der Basisstation 16g zugewandte Richtung erforderlich. Hierdurch ist das Gegenrastelement 76g mittels einer weiteren Schrägfläche des Rastelements 74g entgegen einer Kraft des Federelements in eine vom Rastelement 74g abgewandte Richtung bewegbar. Zu einem Halten des Gegenrastelements 76g in einer ausgelenkten Position, insbesondere zumindest bis die zumindest zwei Flachkontaktladeelemente 18g, 20g aus der Gegenkontakteinheit 28g herausbewegt sind, weist die Positionshalteeinheit 38g zumindest ein Auslenkhalteelement 80g auf. Das Auslenkhalteelement 80g ist hierbei als Elektromagnet ausgebildet. Nach einer Erkennung eines vollständig aus der Gegenkontakteinheit 28g herausgefahrenen Zustands der zumindest zwei Flachkontaktladeelemente 18g, 20g gibt das Auslenkhalteelement 80g das Gegenrastelement 76g wieder frei. Das Gegenrastelement 76g ist somit wieder mittels des Federelements in eine Ausgangsposition bewegbar. Es ist jedoch auch denkbar, dass die Positionshalteeinheit 38g zumindest ein Aktorelement umfasst, das dazu vorgesehen ist, das Gegenrastelement 76g automatisch auszulenken, insbesondere nach einer Beendigung eines Ladeprozesses. Das Aktorelement kann hierbei am Serviceroboter 12g oder an der Basisstation 16g angeordnet sein. Hinsichtlich weiterer Funktionen und Merkmale des in Figur 12 dargestellten Servicerobotersystems 10g darf auf das in den Figuren 1 bis 4 dargestellte Servicerobotersystem 10a verwiesen werden.

Figur 13 zeigt ein weiteres alternatives Servicerobotersystem 10h mit zumindest einem Serviceroboter 12h, der zumindest eine Energiespeichereinheit 14h umfasst, und mit zumindest einer Basisstation 16h zumindest zu einer Energiespeisung der Energiespeichereinheit 14h in zumindest einem Zustand, wobei der Serviceroboter 12h oder die Basisstation 16h zumindest zwei Flachkontaktladeelemente 18h, 20h aufweist. In dem in Figur 13 dargestellten Ausführungsbeispiel weist der Serviceroboter 12h die zumindest zwei Flachkontaktladeelemente 18h, 20h auf. Die zumindest zwei Flachkontaktladeelemente 18h, 20h sind zungenartig ausgebildet. Die zumindest zwei Flachkontaktladeelemente 18h, 20h sind zu einer Kontaktierung von zumindest zwei Gegenkontaktelementen 32h, 34h einer Gegenkontakteinheit 28h vorgesehen. Die zumindest zwei Gegenkontaktelemente 32h, 34h sind hierbei an der Basisstation 16h angeordnet.

Des Weiteren umfasst das Servicerobotersystem 10h zumindest einen weiteren Serviceroboter 82h, der zumindest zwei Flachkontaktladeelemente 84h, 86h umfasst. Die zumindest zwei Flachkontaktladeelemente 84h, 86h des weiteren Serviceroboters 82h sind dazu vorgesehen, mit zumindest einem der zumindest zwei Gegenkontaktelemente 32h, 34h und zumindest einem weiteren Gegenkontaktelement 88h der Gegenkontakteinheit 28h zusammenzuwirken. Das weitere Gegenkontaktelement 88h ist ebenfalls an der Basisstation 16h angeordnet. Hierbei ist das weitere Gegenkontaktelement 88h als positiver elektrischer Pol für den weiteren Serviceroboter 82h ausgebildet. Das Gegenkontaktelement 32h, das zu einer Kontaktierung mit zumindest einem Flachkontaktladeelement 84h des weiteren Serviceroboters 82h und mit zumindest einem Flachkontaktladeelement 18h des Serviceroboters 12h vorgesehen ist, ist als negativer elektrischer Pol ausgebildet. Somit ist das als negativer elektrischer Pol ausgebildete Gegenkontaktelement 32h für den Serviceroboter 12h und den weiteren Serviceroboter 82h in einer Ebene angeordnet. Das Gegenkontaktelement 34h, das als positiver elektrischer Pol für zumindest eines der zumindest zwei Flachkontaktladeelemente 18h, 20h des Serviceroboters 12h ausgebildet ist, ist, betrachtet entlang einer zumindest im Wesentlichen parallel zu einer Hochachse 26h der Basisstation 16h verlaufenden Richtung, relativ zum weiteren Gegenkontaktelement 88h beabstandet angeordnet. Hinsichtlich weiterer Funktionen und Merkmale des in Figur 13 dargestellten Servicerobotersystems 10h darf auf das in den Figuren 1 bis 4 dargestellte Servicerobotersystem 10a verwiesen werden.

## Patentansprüche

1. Rasenmähersystem mit zumindest einem autonomen Rasenmäher, der zumindest eine Energiespeichereinheit (14a; 14c; 14e) umfasst, und mit zumindest einer Basisstation zumindest zu einer Energiespeisung der Energiespeichereinheit (14a; 14c; 14e) in zumindest einem Zustand, wobei der autonome Rasenmäher oder die Basisstation zumindest zwei Flachkontaktladeelemente (18a, 20a; 18b, 20b; 18c, 20c; 18d, 20d; 18e, 20e; 18f, 20f; 18g, 20g; 18h, 20h) aufweist,
wobei die zumindest zwei Flachkontaktladeelemente dazu vorgesehen sind, einen Ladeandockprozess des autonomen Rasenmähers an der Basisstation in einem Winkelbereich von mehr als 15° zu ermöglichen, wobei der Winkelbereich ausgehend von einer Längsachse zumindest eines der zumindest zwei Flachkontaktladeelemente verläuft, wobei sich jeweils 50% des Winkelbereichs ausgehend von der Längsachse in zwei entgegengesetzte Richtungen erstrecken,
**gekennzeichnet durch** zumindest eine Freigabeeinheit, die dazu vorgesehen ist, zumindest eine maximale Ladespannung in zumindest einer Ladeposition des autonomen Rasenmähers relativ zur Basisstation in Abhängigkeit von zumindest einer Kenngröße freizugeben, wobei zu diesem Zwecke der autonome Rasenmäher und die Basisstation jeweils zumindest eine kabellose Kommunikationseinheit umfassen, die zu einer bidirektionalen Übertragung von elektronischen Daten oder digitalen Signalen vorgesehen ist.

2. Rasenmähersystem nach Anspruch 1, **dadurch gekennzeichnet, dass** der Ladeandockprozess des autonomen Rasenmähers bezogen auf eine Zentrumsachse (22a; 22c; 22e) der Basisstation relativ zu einer Mittelachse (24a; 24c; 24e) autonomen Rasenmähers Serviceroboters in einem Winkelbereich von zumindest ± 7,5° ermöglichbar ist.

3. Rasenmähersystem nach Anspruch 1 oder 2, **dadurch gekennzeichnet, dass** die zumindest zwei Flachkontaktladeelemente (18a, 20a; 18b, 20b; 18c, 20c; 18d, 20d; 18e, 20e; 18f, 20f; 18g, 20g; 18h, 20h) vertikal versetzt zueinander angeordnet sind.

4. Rasenmähersystem nach einem der vorhergehenden Ansprüche, **dadurch gekennzeichnet, dass** die zumindest zwei Flachkontaktladeelemente (18a, 20a; 18b, 20b; 18c, 20c; 18d, 20d; 18e, 20e; 18f, 20f; 18g, 20g; 18h, 20h), betrachtet entlang einer Hochachse (26a; 26b; 26c; 26d; 26e; 72f; 72g; 72h) des autonomen Rasenmähers oder der Basisstation, zumindest im Wesentlichen fluchtend zueinander angeordnet sind.

5. Rasenmähersystem nach einem der vorhergehenden Ansprüche, **dadurch gekennzeichnet, dass** die zumindest zwei Flachkontaktladeelemente (18a, 20a; 18b, 20b; 18c, 20c; 18d, 20d; 18e, 20e; 18f, 20f; 18g, 20g; 18h, 20h) plattenartig oder zungenartig ausgebildet sind.

6. Rasenmähersystem nach einem der vorhergehenden Ansprüche, **gekennzeichnet durch** zumindest eine Gegenkontakteinheit (28a; 28b; 28c; 28d; 28e; 28f; 28g; 28h), die zu einer Aufnahme zumindest eines der zumindest zwei Flachkontaktladeelemente (18a, 20a; 18b, 20b; 18c, 20c; 18d, 20d; 18e, 20e; 18f, 20f; 18g, 20g; 18h, 20h) vorgesehen ist und die derart ausgestaltet ist, dass der Ladeandockprozess des autonomen Rasenmähers bezogen auf die Zentrumsachse (22a; 22c; 22e) der Basisstation zur Mittelachse (24a; 24c; 24e) des autonomen Rasenmähers in einem Winkelbereich von zumindest ± 7,5° ermöglichtbar ist.

7. Rasenmähersystem nach einem der vorhergehenden Ansprüche, **gekennzeichnet durch** zumindest eine Gegenkontakteinheit (28a; 28b; 28c; 28d; 28e; 28f; 28g; 28h), die zu einer Aufnahme zumindest eines der zumindest zwei Flachkontaktladeelemente (18a, 20a; 18b, 20b; 18c, 20c; 18d, 20d; 18e, 20e; 18f, 20f; 18g, 20g; 18h, 20h) vorgesehen ist und die eine Einführöffnung (30a; 30b; 30c; 30d; 30e; 30f; 30g; 30h) aufweist, die eine minimale Breitenerstreckung aufweist, die zumindest einem Dreifachen einer maximalen Breitenerstreckung eines der zumindest zwei Flachkontaktladeelemente (18a, 20a; 18b, 20b; 18c, 20c; 18d, 20d; 18e, 20e; 18f, 20f; 18g, 20g; 18h, 20h) entspricht.

8. Rasenmähersystem nach einem der vorhergehenden Ansprüche, **gekennzeichnet durch** zumindest eine Gegenkontakteinheit (28a; 28b; 28c; 28d; 28e; 28f; 28g; 28h), die zumindest ein Gegenkontaktelement (32a, 34a; 32b, 34b; 32c, 34c; 32d, 34d; 32e, 34e; 32f, 34f; 32g, 34g; 32h, 34h) aufweist, das, betrachtet in einer zumindest im Wesentlichen senkrecht zu einer Hochachse (26a; 26b; 26c; 26d; 26e; 72f; 72g; 72h) des autonomen Rasenmähers oder der Basisstation verlaufenden Horizontalebene, flächig ausgebildet ist.

9. Rasenmähersystem nach einem der vorhergehenden Ansprüche, **gekennzeichnet durch** zumindest eine Gegenkontakteinheit (28d; 28e; 28e'), die zu einer Aufnahme zumindest eines der zumindest zwei Flachkontaktladeelemente (18d, 20d; 18e, 20e) vorgesehen ist und die sich zumindest über einen Winkelbereich von mehr als 30° erstreckt.

10. Rasenmähersystem nach einem der vorhergehenden Ansprüche, **dadurch gekennzeichnet, dass** die zumindest zwei Flachkontaktladeelemente (18d, 20d; 18f, 20f; 18g, 20g) relativ zueinander beweglich gelagert sind.

11. Autonomer Rasenmäher eines Rasenmähersystems nach einem der vorhergehenden Ansprüche.

12. Basisstation eines Rasenmähersystems nach einem der Ansprüche 1 bis 10.

## Claims

1. Lawnmower system, having at least one autonomous lawnmower that comprises at least one energy storage unit (14a; 14c; 14e), and having at least one base station at least for supplying energy to the energy storage unit (14a; 14c; 14e) in at least one state, wherein the autonomous lawnmower or the base station has at least two flat contact charging elements (18a, 20a; 18b, 20b; 18c, 20c; 18d, 20d; 18e, 20e; 18f, 20f; 18g, 20g; 18h, 20h), wherein the at least two flat contact charging elements are intended to enable a charging docking process of the autonomous lawnmower on the base station in an angular range of more than 15°, wherein the angular range runs from a longitudinal axis of at least one of the at least two flat contact charging elements, wherein in each case 50% of the angular range extends from the longitudinal axis in two opposing directions,
**characterized by** at least one activation unit that is intended to activate at least one maximum charging voltage in at least one charging position of the autonomous lawnmower in relation to the base station depending on at least one characteristic variable, wherein, for this purpose, the autonomous lawnmower and the base station each comprise at least one wireless communication unit that is intended for bidirectional transmission of electronic data or digital signals.

2. Lawnmower system according to Claim 1, **characterized in that** the charging docking process of the autonomous lawnmower with respect to a centre axis (22a; 22c; 22e) of the base station in relation to a central axis (24a; 24c; 24e) of the autonomous lawnmower service robot is able to be permitted in an angular range of at least ± 7.5°.

3. Lawnmower system according to Claim 1 or 2, **characterized in that** the at least two flat contact charging elements (18a, 20a; 18b, 20b; 18c, 20c; 18d, 20d; 18e, 20e; 18f, 20f; 18g, 20g; 18h, 20h) are arranged vertically offset with respect to one another.

4. Lawnmower system according to one of the preceding claims, **characterized in that** the at least two flat contact charging elements (18a, 20a; 18b, 20b; 18c, 20c; 18d, 20d; 18e, 20e; 18f, 20f; 18g, 20g; 18h, 20h), considered along a height axis (26a; 26b; 26c; 26d; 26e; 72f; 72g; 72h) of the autonomous lawnmower or of the base station, are arranged at least substantially flush with respect to one another.

5. Lawnmower system according to one of the preceding claims, **characterized in that** the at least two flat contact charging elements (18a, 20a; 18b, 20b; 18c, 20c; 18d, 20d; 18e, 20e; 18f, 20f; 18g, 20g; 18h, 20h) are designed so as to be plate-shaped or tongue-shaped.

6. Lawnmower system according to one of the preceding claims, **characterized by** at least one mating contact unit (28a; 28b; 28c; 28d; 28e; 28f; 28g; 28h) that is intended to receive at least one of the at least two flat contact charging elements (18a, 20a; 18b, 20b; 18c, 20c; 18d, 20d; 18e, 20e; 18f, 20f; 18g, 20g; 18h, 20h) and that is designed such that the charging docking process of the autonomous lawnmower with respect to the centre axis (22a; 22c; 22e) of the base station in relation to the central axis (24a; 24c; 24e) of the autonomous lawnmower is able to be permitted in an angular range of at least ± 7.5°.

7. Lawnmower system according to one of the preceding claims, **characterized by** at least one mating contact unit (28a; 28b; 28c; 28d; 28e; 28f; 28g; 28h) that is intended to receive at least one of the at least two flat contact charging elements (18a, 20a; 18b, 20b; 18c, 20c; 18d, 20d; 18e, 20e; 18f, 20f; 18g, 20g; 18h, 20h) and that has an insertion opening (30a; 30b; 30c; 30d; 30e; 30f; 30g; 30h) that has a minimum width extent that corresponds to at least three times a maximum width extent of one of the at least two flat contact charging elements (18a, 20a; 18b, 20b; 18c, 20c; 18d, 20d; 18e, 20e; 18f, 20f; 18g, 20g; 18h, 20h).

8. Lawnmower system according to one of the preceding claims, **characterized by** at least one mating contact unit (28a; 28b; 28c; 28d; 28e; 28f; 28g; 28h) that has at least one mating contact element (32a, 34a; 32b, 34b; 32c, 34c; 32d, 34d; 32e, 34e; 32f, 34f; 32g, 34g; 32h, 34h) that, considered in a horizontal plane running at least substantially perpendicular to a height axis (26a; 26b; 26c; 26d; 26e; 72f; 72g; 72h) of the autonomous lawnmower or of the base station, is designed so as to be flat.

9. Lawnmower system according to one of the preceding claims, **characterized by** at least one mating contact unit (28d; 28e; 28e') that is intended to receive at least one of the at least two flat contact charging elements (18d, 20d; 18e, 20e) and that extends at least over an angular range of more than 30°.

10. Lawnmower system according to one of the preceding claims, **characterized in that** the at least two flat contact charging elements (18d, 20d; 18f, 20f; 18g, 20g) are mounted so as to be able to move in relation to one another.

11. Autonomous lawnmower of a lawnmower system according to one of the preceding claims.

12. Base station of a lawnmower system according to one of Claims 1 to 10.

## Revendications

1. Système de tondeuse à gazon comprenant au moins une tondeuse à gazon autonome qui comprend au moins une unité de stockage d'énergie (14a ; 14c ; 14e), et au moins une station de base au moins pour une alimentation en énergie de l'unité de stockage d'énergie (14a ; 14c ; 14e) dans au moins un état, la tondeuse à gazon autonome ou la station de base présentant au moins deux éléments de charge à contacts plats (18a, 20a ; 18b, 20b ; 18c, 20c ; 18d, 20d ; 18e, 20e ; 18f, 20f ; 18g, 20g ; 18h, 20h), les au moins deux éléments de charge à contacts plats étant prévus pour permettre un processus d'ancrage de charge de la tondeuse à gazon autonome à la station de base dans une plage angulaire supérieure à 15°, la plage angulaire s'étendant à partir d'un axe longitudinal d'au moins l'un des au moins deux éléments de charge à contacts plats, à chaque fois 50 % de la plage angulaire s'étendant à partir de l'axe longitudinal dans deux directions opposées, **caractérisé par** au moins une unité de libération qui est prévue pour libérer au moins une tension de charge maximale dans au moins une position de charge de la tondeuse à gazon autonome par rapport à la station de base en fonction d'au moins une grandeur caractéristique, et à cet effet, la tondeuse à gazon autonome et la station de base comprenant à chaque fois au moins une unité de communication sans fil qui est prévue pour un transfert bidirectionnel de données électroniques ou de signaux numériques.

2. Système de tondeuse à gazon selon la revendication 1, **caractérisé en ce que** le processus d'ancrage de charge de la tondeuse à gazon autonome par rapport à un axe central (22a ; 22c ; 22e) de la station de base peut être réalisé dans une plage angulaire d'au moins ± 7,5° par rapport à un axe médian (24a ; 24c ; 24e) de la tondeuse à gazon autonome robot de service.

3. Système de tondeuse à gazon selon la revendication 1 ou 2, **caractérisé en ce que** les au moins deux éléments de charge à contacts plats (18a, 20a ; 18b, 20b ; 18c, 20c ; 18d, 20d ; 18e, 20e ; 18f, 20f ; 18g, 20g ; 18h, 20h) sont disposés de manière décalée verticalement l'un par rapport à l'autre.

4. Système de tondeuse à gazon selon l'une quelconque des revendications précédentes, **caractérisé en ce que** les au moins deux éléments de charge à contacts plats (18a, 20a ; 18b, 20b ; 18c, 20c ; 18d, 20d ; 18e, 20e ; 18f, 20f ; 18g, 20g ; 18h, 20h), vu le long d'un axe vertical (26a ; 26b ; 26c ; 26d ; 26e ; 72f ; 72g ; 72h) de la tondeuse à gazon autonome ou de la station de base sont disposés au moins essentiellement en affleurement l'un avec l'autre.

5. Système de tondeuse à gazon selon l'une quelconque des revendications précédentes, **caractérisé en ce que** les au moins deux éléments de charge à contacts plats (18a, 20a ; 18b, 20b ; 18c, 20c ; 18d, 20d ; 18e, 20e ; 18f, 20f ; 18g, 20g ; 18h, 20h) sont réalisés en forme de plaque ou de langue.

6. Système de tondeuse à gazon selon l'une quelconque des revendications précédentes, **caractérisé par** au moins une unité de contact conjuguée (28a ; 28b ; 28c ; 28d ; 28e ; 28f ; 28g ; 28h) qui est prévue pour recevoir au moins l'un des au moins deux éléments de charge à contacts plats (18a, 20a ; 18b, 20b ; 18c, 20c ; 18d, 20d ; 18e, 20e ; 18f, 20f ; 18g, 20g ; 18h, 20h) et qui est configurée de telle sorte que le processus d'ancrage de charge de la tondeuse à gazon autonome par rapport à l'axe central (22a ; 22c ; 22e) de la station de base soit possible dans une plage angulaire d'au moins ± 7,5° par rapport à l'axe médian (24a ; 24c ; 24e) de la tondeuse à gazon autonome.

7. Système de tondeuse à gazon selon l'une quelconque des revendications précédentes, **caractérisé par** au moins une unité de contact conjuguée (28a ; 28b ; 28c ; 28d ; 28e ; 28f ; 28g ; 28h) qui est prévue pour recevoir au moins l'un des au moins deux éléments de charge à contacts plats (18a, 20a ; 18b, 20b ; 18c, 20c ; 18d, 20d ; 18e, 20e ; 18f, 20f ; 18g, 20g ; 18h, 20h) et qui présente une ouverture d'introduction (30a ; 30b ; 30c ; 30d ; 30e ; 30f ; 30g ; 30h) qui présentent une étendue minimale en largeur qui correspond au moins au triple d'une étendue maximale en largeur de l'un des au moins deux éléments de charge à contacts plats (18a, 20a ; 18b, 20b ; 18c, 20c ; 18d, 20d ; 18e, 20e ; 18f, 20f ; 18g, 20g ; 18h, 20h) .

8. Système de tondeuse à gazon selon l'une quelconque des revendications précédentes, **caractérisé par** au moins une unité de contact conjuguée (28a ; 28b ; 28c ; 28d ; 28e ; 28f ; 28g ; 28h) qui présente au moins un élément de contact conjugué (32a, 34a ; 32b, 34b ; 32c, 34c ; 32d, 34d ; 32e, 34e ; 32f, 34f ; 32g, 34g ; 32h, 34h) qui, considéré dans un plan horizontal s'étendant au moins essentiellement perpendiculairement à un axe vertical (26a ; 26b ; 26c ; 26d ; 26e ; 72f ; 72g ; 72h) de la tondeuse à gazon autonome ou de la station de base, est réalisé sous forme plate.

9. Système de tondeuse à gazon selon l'une quelconque des revendications précédentes, **caractérisé par** au moins une unité de contact conjuguée (28d ; 28e ; 28e') qui est prévue pour recevoir au moins l'un des au moins deux éléments de charge à contacts plats (18d, 20d ; 18e, 20e) et qui s'étend au moins sur une plage angulaire supérieure à 30°.

10. Système de tondeuse à gazon selon l'une quelconque des revendications précédentes, **caractérisé en ce que** les au moins deux éléments de charge à contacts plats (18d, 20d ; 18f, 20f ; 18g, 20g) sont supportés de manière déplaçable les uns par rapport aux autres.

11. Tondeuse à gazon autonome d'un système de tondeuse à gazon selon l'une quelconque des revendications précédentes.

12. Station de base d'un système de tondeuse à gazon selon l'une quelconque des revendications 1 à 10.
